# EUROPEAN PATENT APPLICATION

(11) **EP 3 457 747 A1**
(43) Date of publication of application: **20.03.2019**
(21) Application number: 17795561.4
(22) Date of filing: 10.05.2017
(51) Int. Cl.: H04W 28/20

(54) **BANDWIDTH LIMITED DEVICE AND COMMUNICATION METHOD THEREFOR, AND COMPUTER STORAGE MEDIUM**

(30) Priority: 13.05.2016 CN 201610323180
(71) Applicant: ZTE Corporation, Shenzhen, Guangdong 518057 (CN)
(72) Inventor: CHEN, Lin, Shenzhen, Guangdong 518057 (CN); DAI, Bo, Shenzhen, Guangdong 518057 (CN); LU, Ting, Shenzhen, Guangdong 518057 (CN); YANG, Jin, Shenzhen, Guangdong 518057 (CN)
(74) Representative: Lavoix
(86) International application number: PCT/CN2017/083830
(87) International publication number: WO 2017/193943

(57) **Abstract**

Disclosed are a bandwidth limited device and a communication method therefor, and a computer storage medium. The method comprises: receiving bandwidth limited device to device (D2D) resource configuration/allocation information; and performing D2D transmission/reception according to the bandwidth limited D2D resource configuration/allocation information.

## Description

### CROSS-REFERENCE TO RELATED APPLICATION

The present application is based upon and claims benefit of Chinese Patent Application No. 201610323180.6, filed on May 13, 2016, the contents of which are hereby incorporated by reference in its entirety.

### TECHNICAL FIELD

The present disclosure relates to a wireless communication technology, and in particular to a bandwidth limited device and communication method therefor, and a computer storage medium.

### BACKGROUND

With the development of wireless multimedia services, people's increasing demands for a high data rate and user experience raise, thereby putting forward higher requirements for system capacity and coverage of the traditional cellular network. On the other hand, public security, social network, near data sharing, local advertisement, and other application scenarios increase people's demands for knowing and communicating with people and things nearby (namely a Proximity Service (ProSe)).

A traditional eNodeB (eNB)-centric cellular network is distinctly limited in supporting the high data rate and the ProSe. In this requirement background, a Device-to-Device (D2D) technology representing a new development direction of future communication technology emerges at the right moment. The application of the D2D technology may reduce a load of the cellular network, reduce a battery power consumption of User Equipment (UE), increase the data rate, and improve the robustness of network infrastructure, thereby meeting the requirements for a high data rate service and the ProSe well. At present, the D2D technology is also called ProSe and SideLink (SL).

The D2D technology usually includes a D2D discovery technology and a D2D communication technology. The D2D discovery technology is the technology for judging or determining whether first UE is proximal to second UE. Generally, D2D UE may find each other by sending or receiving a discovery signal or information. The D2D communication technology is the technology in which part or all of communication data among the D2D UE may directly communicate with each other bypassing the network infrastructure.

With the development of requirements on Internet of everything, the 3rd Generation Partnership Project (3GPP) standardizes a Machine Type Communication (MTC), eMTC work of R12 or R13 is nearly completed, and standardization work of Narrow Band-Internet of Things (NB-IoT) is still going on. The eMTC of R13 is added with a support for coverage enhancement and a support for limited bandwidth on the basis of supporting a low cost. Generally, a Radio Frequency (RF) sending-receiving capacity of eMTC UE is limited to 1.4 MHz, and an RF sending-receiving bandwidth of NB-IoT UE is limited to 180 MHz. The purpose of coverage enhancement is usually achieved by repeatedly transmitting data between an eNB and the eMTC/NB-IoT UE. In consideration of a low cost characteristic of the eMTC/NB-IoT UE, it is usually hoped to prolong the service life of the eMTC/NB-IoT UE as long as possible, but the coverage enhancement is bound to cause multiple repeated transmissions of a data packet, thereby consuming the power of the UE quickly. Except the eMTC and NB-IoT UE, a wearable device also has the similar application requirements for low cost, limited bandwidth, low power consumption, and so on.

However, D2D transmission is implemented on the entire system bandwidth at present, and the existing system has not provided a perfect solution about how to support bandwidth limited UE to perform the D2D transmission.

### SUMMARY

In order to solve the above technical problem, the embodiments of the present disclosure provide a bandwidth limited device and communication method therefor, and a computer storage medium.

The communication method for a bandwidth limited device provided by the embodiments of the present disclosure includes:
configuration or allocation information about a bandwidth limited D2D resource is received; and
D2D sending or reception is performed according to configuration or allocation information about the bandwidth limited D2D resource.

In the embodiments of the present disclosure, the bandwidth limited D2D resource is a resource or resource pool for D2D discovery or communication which is configured or allocated on one or more narrow bands. A bandwidth of the resource or resource pool for D2D discovery or communication does not exceed a bandwidth of the narrow band.

In the embodiments of the present disclosure, the bandwidth of the narrow band includes at least one of 1.4 MHz or 180 MHz.

In the embodiments of the present disclosure, configuration or allocation information about the bandwidth limited D2D resource includes at least one of the following:
an indication of limited bandwidth;
an indication of the existence of a resource for sending or receiving in bandwidth limited D2D discovery or communication;
a resource or resource pool for sending or receiving in bandwidth limited D2D discovery or communication;
an index of the resource pool for sending or receiving in bandwidth limited D2D discovery or communication;
a narrow band corresponding to sending or receiving in bandwidth limited D2D discovery or communication;
a narrow band corresponding to the resource or resource pool for sending or receiving in bandwidth limited D2D discovery or communication;
a frequency point corresponding to the resource or resource pool for sending or receiving in bandwidth limited D2D discovery or communication;
a Public Land Mobile Network (PLMN) corresponding to the resource or resource pool for sending or receiving in bandwidth limited D2D discovery or communication;
a cell Identity (ID) corresponding to the resource or resource pool for sending or receiving in bandwidth limited D2D discovery or communication;
a narrow band index corresponding to the resource or resource pool for sending or receiving in bandwidth limited D2D discovery or communication;
a narrow band corresponding to D2D transmission by bandwidth limited User Equipment (UE); or
the resource or resource pool for sending or receiving in bandwidth limited D2D discovery or communication corresponding to the D2D transmission by the bandwidth limited UE.

In the embodiments of the present disclosure, the bandwidth limited D2D communication resource or resource pool includes at least one of the following:
a D2D control resource or resource pool; and
a D2D data resource or resource pool.

In the embodiments of the present disclosure, configuration or allocation information about the bandwidth limited D2D resource is received may further include:
the bandwidth limited UE receives configuration or allocation information about the bandwidth limited D2D resource which is sent by a network control unit; and/or,
the bandwidth limited UE acquires configuration or allocation information about the bandwidth limited D2D resource which is preconfigured by a system or is built in the system; and/or,
the bandwidth limited UE receives configuration or allocation information about the bandwidth limited D2D resource which is sent by relay UE or opposite-end UE; and/or
the relay UE receives configuration or allocation information about the bandwidth limited D2D resource which is sent by the network control unit; and/or,
the opposite-end UE receives configuration or allocation information about the bandwidth limited D2D resource which is sent by the network control unit; and/or,
the opposite-end UE receives configuration or allocation information about the bandwidth limited D2D resource which is sent by the bandwidth limited UE.

In the embodiments of the present disclosure, the network control unit includes at least one of an eNB, a ProSe entity, or a Mobility Management Entity (MME).

The relay UE and the opposite-end UE satisfy at least one of the following:
the relay UE is UE that supports bandwidth limited D2D discovery or communication, and forwards data or signaling from the bandwidth limited UE to a network, or forwards the data or signaling from the network to the bandwidth limited UE;
the opposite-end UE is UE that supports the bandwidth limited D2D discovery or communication, and performs D2D discovery or communication with the bandwidth limited UE; and
the relay UE and the opposite-end UE are UE with a limited bandwidth or a normal bandwidth.

In the embodiments of the present disclosure, the bandwidth limited UE or the relay UE or the opposite-end UE receives configuration or allocation information about the bandwidth limited D2D resource which is sent by the network control unit may further include:
the bandwidth limited UE or the relay UE or the opposite-end UE receives configuration or allocation information about a resource or resource pool for sending or receiving in bandwidth limited D2D discovery or communication, which is sent by the network control unit through a system broadcast message; and/or
the bandwidth limited UE or the relay UE or the opposite-end UE receives the configuration or allocation information about the resource or resource pool for sending or receiving in bandwidth limited D2D discovery or communication, which is sent by the network control unit through proprietary signaling.

In the embodiments of the present disclosure, before the configuration or allocation information about the resource or resource pool for sending or receiving in bandwidth limited UE receives the bandwidth limited D2D discovery or communication, which is sent by the network control unit through the proprietary signaling, the method further includes:
the bandwidth limited UE or the relay UE or the opposite-end UE sends a bandwidth limited D2D resource configuration or allocation request to the network control unit.

In the embodiments of the present disclosure, the bandwidth limited D2D resource configuration or allocation request includes at least one of the following:
the indication of limited bandwidth;
a bandwidth limited UE ID;
a bandwidth limited D2D relay indication;
a bandwidth limited D2D unicast indication;
an indication of the relay UE supporting bandwidth limited D2D transmission;
an ID of the relay UE supporting the bandwidth limited D2D transmission;
an ID of the bandwidth limited UE accessing a relay;
an indication of the opposite-end UE supporting bandwidth limited D2D transmission;
an ID of the opposite-end UE supporting bandwidth limited D2D transmission;
a request for the resource for sending or receiving in bandwidth limited D2D discovery or communication;
a resource or resource pool narrow band for sending or receiving in bandwidth limited D2D discovery or communication;
an index or size of the resource or resource pool narrow band for sending or receiving in bandwidth limited D2D discovery or communication;
the resource or resource pool for sending or receiving in bandwidth limited D2D discovery or communication; or
an index of the resource or resource pool for sending or receiving in bandwidth limited D2D discovery or communication.

In the embodiments of the present disclosure, the bandwidth limited D2D resource configuration or allocation request is carried through at least one of the following:
SidelinkUEInformation;
SL buffer state report information; or
newly designed Radio Resource Control (RRC) proprietary signaling.

In the embodiments of the present disclosure, configuration or allocation information about the bandwidth limited D2D resource, which is sent by the relay UE or the opposite-end UE or the bandwidth limited UE, may be carried through at least one of the following:
relay discovery broadcast information;
relay discovery response information;
relay discovery request information;
D2D discovery broadcast information;
D2D discovery request information;
D2D discovery response information;
direct connection establishment request information;
direct connection establishment response information;
PC5 resource allocation information; or
newly designed PC5 signaling.

In the embodiments of the present disclosure, before the bandwidth limited UE receives configuration or allocation information about the bandwidth limited D2D resource which is sent by the relay UE or the opposite-end UE, the method further includes: the bandwidth limited UE sends a bandwidth limited D2D communication request to the relay UE or the opposite-end UE; or,
before the opposite-end UE receives configuration or allocation information about the bandwidth limited D2D resource which is sent by the bandwidth limited UE, the method further includes: the opposite-end UE sends the bandwidth limited D2D communication request to the bandwidth limited UE.

In the embodiments of the present disclosure, the bandwidth limited D2D communication request includes at least one of the following:
the indication of limited bandwidth;
the bandwidth limited UE ID;
the bandwidth limited D2D relay indication;
a bandwidth limited D2D unicast communication indication;
a request for the resource for sending or receiving in bandwidth limited D2D discovery or communication;
the resource or resource pool narrow band for sending or receiving in bandwidth limited D2D discovery or communication;
an index or size of the resource or resource pool narrow band for sending or receiving in bandwidth limited D2D discovery or communication;
the resource or resource pool for sending or receiving in bandwidth limited D2D discovery or communication; or
an index of the resource or resource pool for sending or receiving in bandwidth limited D2D discovery or communication.

In the embodiments of the present disclosure, the bandwidth limited D2D communication request may be carried through at least one of the following:
the relay discovery request information;
the relay discovery broadcast information;
the D2D discovery request information;
the D2D discovery broadcast information;
the direct connection establishment request information;
a PC5 buffer state report; or
the newly designed PC5 signaling.

In the embodiments of the present disclosure, the D2D reception is performed according to configuration or allocation information about the bandwidth limited D2D resource may further include:
the bandwidth limited UE performs the D2D reception according to a resource pool corresponding to a resource pool for receiving or an index of the resource pool for receiving in bandwidth limited D2D discovery or communication, which is configured by the network control unit or the relay UE or the opposite-end UE; and/or
the bandwidth limited UE performs the D2D reception according to the resource corresponding to a narrow band for receiving or an index of the narrow band for receiving in bandwidth limited D2D discovery or communication, which is configured by the network control unit or the relay UE or the opposite-end UE; and/or
the relay UE or the opposite-end UE performs D2D discovery or communication receiving in all the resource pools for receiving in bandwidth limited D2D discovery or communication; and/or
the bandwidth limited UE or the relay UE or the opposite-end UE selects the first resource pool for receiving in bandwidth limited D2D discovery or communication to perform the D2D discovery or communication receiving; and/or
the bandwidth limited UE performs, in a time division mode, the D2D discovery or communication receiving in all the resource pools for receiving in bandwidth limited D2D discovery or communication.

In the embodiments of the present disclosure, the D2D sending is performed according to configuration or allocation information about the bandwidth limited D2D resource may further include:
the bandwidth limited UE or the relay UE or the opposite-end UE selects a resource from a first resource pool for sending in bandwidth limited D2D discovery or communication, to perform the D2D discovery or communication sending; and/or,
the bandwidth limited UE selects a resource from a resource pool for sending in bandwidth limited D2D discovery or communication which is selected randomly or selected by performing the hash map on an ID of the bandwidth limited UE according to a predefined rule, to perform the D2D discovery or communication sending; and/or,
the bandwidth limited UE uses a narrow band resource corresponding to the bandwidth limited D2D transmission to perform the D2D transmission; and/or,
the relay UE or the opposite-end UE selects, according to narrow band information corresponding to the received resource used for the D2D transmission by the bandwidth limited UE, a resource from a resource pool for sending or receiving in bandwidth limited D2D discovery or communication corresponding to the narrow band, to perform the D2D discovery or communication sending; and/or
the relay UE or the opposite-end UE selects, according to the resource or resource pool for sending or receiving in bandwidth limited D2D discovery or communication corresponding to the received resource used for the D2D transmission by the bandwidth limited UE, a resource from the corresponding resource pool for sending or receiving in bandwidth limited D2D discovery or communication, to perform the D2D discovery or communication sending; and/or
the bandwidth limited UE selects the resource according to a resource pool corresponding to a received resource pool for sending or received index of the resource pool for sending in bandwidth limited D2D discovery or communication, to perform sending; and/or
the bandwidth limited UE selects the resource according to the resource pool corresponding to the received resource narrow band for sending or received index of the resource narrow band for sending in bandwidth limited D2D discovery or communication, to perform sending; and/or
the bandwidth limited UE performs the D2D sending according to a resource for sending in bandwidth limited D2D discovery or communication which is allocated by the network control unit or the relay UE or the opposite-end UE; and/or,
the relay UE or the opposite-end UE assembles and configures, according to the resource narrow band corresponding to a resource for sending in bandwidth limited D2D discovery or communication which is allocated by the network control unit, information about the bandwidth limited UE of the corresponding narrow band, to perform the D2D sending.

The bandwidth limited device provided by the embodiments of the present disclosure includes: a receiving unit and a transmitting unit.

The receiving unit is configured to receive configuration or allocation information about the bandwidth limited D2D resource.

The transmitting unit is configured to perform D2D sending or reception according to configuration or allocation information about the bandwidth limited D2D resource.

In the embodiments of the present disclosure, configuration or allocation information about the bandwidth limited D2D resource includes at least one of the following:
the indication of limited bandwidth;
the indication of the existence of the resource for sending or receiving in bandwidth limited D2D discovery or communication;
the resource or resource pool for sending or receiving in bandwidth limited D2D discovery or communication;
an index of the resource pool for sending or receiving in bandwidth limited D2D discovery or communication;
the narrow band corresponding to sending or receiving in the bandwidth limited D2D discovery or communication;
the narrow band corresponding to the resource or resource pool for sending or receiving in bandwidth limited D2D discovery or communication;
the frequency point corresponding to the resource or resource pool for sending or receiving in bandwidth limited D2D discovery or communication;
the PLMN corresponding to the resource or resource pool for sending or receiving in bandwidth limited D2D discovery or communication;
the cell ID corresponding to the resource or resource pool for sending or receiving in bandwidth limited D2D discovery or communication;
the narrow band index corresponding to the resource or resource pool for sending or receiving in bandwidth limited D2D discovery or communication;
the narrow band corresponding to the D2D transmission by the bandwidth limited UE; or
the resource or resource pool for sending or receiving in bandwidth limited D2D discovery or communication corresponding to the resource used for the D2D transmission by the bandwidth limited UE.

In the embodiments of the present disclosure, the bandwidth limited device is the bandwidth limited UE; correspondingly, the receiving unit is further configured to receive configuration or allocation information about the bandwidth limited D2D resource which is sent by the network control unit; and/or, acquire configuration or allocation information about the bandwidth limited D2D resource which is preconfigured by the system or is built in the system; and/or, receive configuration or allocation information about the bandwidth limited D2D resource which is sent by the relay UE or the opposite-end UE.

The bandwidth limited device is the relay UE, correspondingly the receiving unit is further configured to receive configuration or allocation information about the bandwidth limited D2D resource which is sent by the network control unit.

The bandwidth limited device is the opposite-end UE, correspondingly the receiving unit is further configured to receive configuration or allocation information about the bandwidth limited D2D resource which is sent by the network control unit; and/or, receive configuration or allocation information about the bandwidth limited D2D resource which is sent by the bandwidth limited UE.

In the embodiments of the present disclosure, the transmitting unit includes: a receiving subunit.

The bandwidth limited device is the bandwidth limited UE, correspondingly the receiving subunit is configured to perform the D2D reception according to the resource pool corresponding to the resource pool for receiving or the index of the resource pool for receiving in bandwidth limited D2D discovery or communication, which is configured by the network control unit or the relay UE or the opposite-end UE; and/or perform the D2D reception according to the resource corresponding to the narrow band for receiving or the index of the narrow band for receiving in bandwidth limited D2D discovery or communication, which is configured by the network control unit or the relay UE or the opposite-end UE; and/or, select the first resource pool for receiving in bandwidth limited D2D discovery or communication to perform the D2D discovery or communication receiving; and/or perform, in a time division mode, the D2D discovery or communication receiving in all the resource pools for receiving in bandwidth limited D2D discovery or communication.

The bandwidth limited device is the relay UE or the opposite-end UE, correspondingly the receiving subunit is configured to perform the D2D discovery or communication receiving in all the resource pools for receiving in bandwidth limited D2D discovery or communication; and/or, select the first resource pool for receiving in bandwidth limited D2D discovery or communication to perform the D2D discovery or communication receiving.

In the embodiments of the present disclosure, the transmitting unit includes: a sending subunit.

The bandwidth limited device is the bandwidth limited UE or the relay UE or the opposite-end UE, correspondingly the sending subunit is configured to select a resource from a first resource pool for sending in bandwidth limited D2D discovery or communication, to perform the D2D discovery or communication sending.

The bandwidth limited device is the bandwidth limited UE, correspondingly the sending subunit is configured to select a resource from a resource pool for sending in bandwidth limited D2D discovery or communication which is selected randomly or selected by performing the hash map on the bandwidth limited UE ID according to a predefined rule, to perform the D2D discovery or communication sending; and/or, use the narrow band resource corresponding to the bandwidth limited D2D transmission to perform the D2D transmission.

The bandwidth limited device is the relay UE or the opposite-end UE, correspondingly the sending subunit is configured to select, according to the narrow band information corresponding to the received resource used for the D2D transmission by the bandwidth limited UE, a resource from the resource pool for sending or receiving in bandwidth limited D2D discovery or communication corresponding to the narrow band, to perform the D2D discovery or communication sending; and/or, select, according to the resource or resource pool for sending or receiving in bandwidth limited D2D discovery or communication corresponding to the received resource used for the D2D transmission by the bandwidth limited UE, a resource from the corresponding resource pool for sending or receiving in bandwidth limited D2D discovery or communication, to perform the D2D discovery or communication sending.

The bandwidth limited device is the bandwidth limited UE, correspondingly the sending subunit is configured to select, according to a resource pool corresponding to a received resource pool for sending or received index of the resource pool for sending in bandwidth limited D2D discovery or communication, the resource to perform sending; and/or, select, according to the resource pool corresponding to the received resource narrow band for sending or received index of the resource narrow band for sending in bandwidth limited D2D discovery or communication, the resource to perform sending; and/or, perform the D2D sending according to a resource for sending in bandwidth limited D2D discovery or communication which is allocated by the network control unit or the relay UE or the opposite-end UE.

The bandwidth limited device is the relay UE or the opposite-end UE, correspondingly the sending subunit is configured to assemble and configure, according to a resource narrow band corresponding to a resource for sending in bandwidth limited D2D discovery or communication which is allocated by the network control unit, information about the bandwidth limited UE of the corresponding narrow band, to perform the D2D sending.

The computer storage medium provided by the embodiments of the present disclosure stores a computer program. The computer program is configured to perform the communication method for a bandwidth limited device.

In the technical solution of the embodiments of the present disclosure, configuration or allocation information about the bandwidth limited D2D resource is received, and the D2D sending or reception is performed according to configuration or allocation information about the bandwidth limited D2D resource. By means of the communication method for a bandwidth limited device provided by the embodiments of the present disclosure, it may be supported that the eMTC, the NB-IoT and other bandwidth limited UE send a data packet to the relay UE by the way of D2D, and then the relay UE forwards the data packet to the network; or, the relay UE sends, to the bandwidth limited UE, the data packet coming from the network and to be sent to the bandwidth limited UE by the way of D2D. Moreover, it may also be supported that D2D communication is directly performed between the bandwidth limited UE. The embodiments of the present disclosure consider all situations where a system supports one or multiple narrow bands. When the system supports multiple narrow bands, a resource load condition is considered, a work narrow band is negotiated, and the implementation of data transmission between the bandwidth limited device and the relay UE and a bandwidth limited device on the opposite end is ensured, thereby reducing an energy consumption of the bandwidth limited device with a low cost.

### BRIEF DESCRIPTION DRAWINGS

In the accompanying drawings (not necessarily drawn to scale), the similar reference signs may describe the similar parts in different views. The similar reference signs with different suffix letters may represent different examples of the similar parts. The accompanying drawings generally show, by example rather than by limitation, the embodiments discussed in the present application.
FIG. 1 is a schematic diagram of a D2D communication scenario of a bandwidth limited device.
FIG. 2 is a deployment scenario diagram that NB-IoT UE forwards data through a relay.
FIG. 3 is a flowchart of a communication method for a bandwidth limited device according to an embodiment of the present disclosure.
FIG. 4 is a flowchart of communication of a bandwidth limited device in a first application scenario of the present disclosure.
FIG. 5 is a flowchart of communication of the bandwidth limited device in a second application scenario of the present disclosure.
FIG. 6 is a flowchart of communication of the bandwidth limited device in a third application scenario of the present disclosure.
FIG. 7 is a flowchart of communication of the bandwidth limited device in a fourth application scenario of the present disclosure.
FIG. 8 is a flowchart of communication of the bandwidth limited device in a fifth application scenario of the present disclosure.
FIG. 9 is a flowchart of communication of the bandwidth limited device in a sixth application scenario of the present disclosure.
FIG. 10 is a composition diagram of the bandwidth limited device according to an embodiment of the present disclosure.

### DETAILED DESCRIPTION

In order to understand characteristics and technical contents in the embodiments of the present disclosure in more detail, the implementation of the embodiments of the present disclosure is elaborated in combination with the accompanying drawings. The accompanying drawings are only used for reference, but not intended to limit the embodiments of the present disclosure.

The technical solution of the embodiments of the present disclosure may support a bandwidth limited UE to perform D2D transmission. Specifically, by means of a communication method for a bandwidth limited device provided by the embodiments of the present disclosure, it may be supported that the eMTC, the NB-IoT and other bandwidth limited UE send a data packet to relay UE by the way of D2D, and then the relay UE forwards the data packet to the network; or, the relay UE sends, to the bandwidth limited UE, the data packet coming from the network and to be sent to the bandwidth limited UE by the way of D2D. Moreover, it may also be supported that D2D communication is directly performed between the bandwidth limited UE. The embodiments of the present disclosure consider all situations where a system supports one or multiple narrow bands. When the system supports multiple narrow bands, a resource load condition is considered, a work narrow band is negotiated, and the implementation of data transmission between a bandwidth limited device and the relay UE and a bandwidth limited device on the opposite end is ensured, thereby reducing an energy consumption of the bandwidth limited device with a low cost.

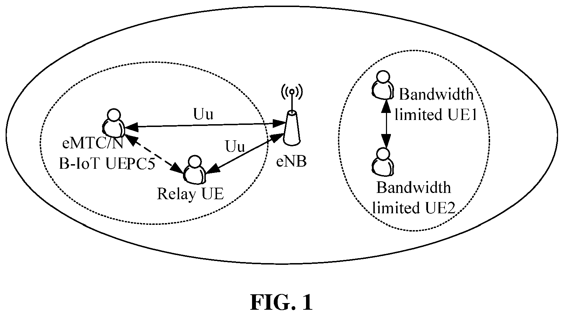

As shown in FIG. 1, bandwidth limited UE (for example, eMTC/NB-IoT UE) may be connected to UE to serve as a relay node (for example, the relay UE); communication is performed between the bandwidth limited UE and the relay UE by the way of D2D; and the relay UE is responsible for forwarding a data packet of the bandwidth limited UE to a network or forwarding the data packet from the network to the bandwidth limited UE. Moreover, there may be a requirement for direct communication between the bandwidth limited UE. As shown in FIG. 1, the data transmission is performed between two pieces of bandwidth limited UE (for example, BL UE1 and BL UE2) by the way of D2D. In this way, the bandwidth limited device may make full use of power saving, high rate, extended coverage, and other characteristics of the D2D communication.

For the bandwidth limited eMTC/NB-IoT/wearable UE hoping to perform the D2D discovery or communication, if the eNB serving the bandwidth limited device supports a plurality of narrow bands at the same time, from the perspective of power saving, it is best to limit D2D reception (including discovery and communication) of the bandwidth limited device on a fixed narrow band, and it is best to agree with the relay UE or the bandwidth limited UE/normal relay UE on an opposite end. If it is bandwidth unlimited relay UE or D2D UE on the opposite end, a resource on any narrow band may be selected freely by SL discovery and communication of the bandwidth limited UE, or configured by the eNB, since the bandwidth unlimited relay UE or D2D UE on the opposite end monitors all receiving resource pools in principle. On the other hand, when the eNB supports a plurality of narrow bands, for the bandwidth limited eMTC UE, the narrow band used for uplink and downlink Uu interface transmission resources, which are allocated by the eNB, may change flexibly according to scheduling of the eNB. But uplink transmission or downlink receiving of the NB-IoT UE may only be fixed on a certain uplink or downlink narrow band. Similarly, the narrow band resource used for the bandwidth limited eMTC UE to perform the D2D sending or reception may change in each frame/each scheduling period. But the narrow band resource used for the NB-IoT UE to perform the D2D sending or reception may only be fixed a certain narrow band; or the narrow band resource used for sending is fixed on a certain narrow band, and the narrow band resource used for reception is fixed on another narrow band.

Generally, the bandwidth limited UE, the relay UE and the normal UE may consider two D2D resource allocation modes. In mode 1, the eNB allocates a proprietary resource. In mode 2, the eNB configures the resource pool, and the UE selects the resource for sending from the resource pool to perform the D2D transmission. If all the proprietary resources are allocated by the eNB, it is best to inform the eNB of information about the relay UE or the bandwidth limited UE on the opposite end with which the present bandwidth limited UE performs the D2D transmission, so as to ensure the resource allocated by the eNB for the bandwidth limited UE and the relay UE to be on a certain narrow band. Moreover, the eNB, the bandwidth limited UE and the relay UE need to negotiate to ensure that the bandwidth limited UE is monitoring the resource pool on the narrow band corresponding to the resource used for the D2D transmission which is sent to the bandwidth limited UE by the relay UE. Moreover, in order to balance a load better, the system may allocate a plurality of D2D discovery or communication resource pools on a plurality of narrow bands. The eNB may consider to allocate different narrow band resources for the different relay UE or the bandwidth limited UE it serves. For a certain piece of relay UE and the bandwidth limited UE it serves, the discovery and communication resources on one or two narrow bands may be used fixedly. In case of two narrow bands, the discovery and communication resources may correspond to sending and receiving narrow bands of bandwidth limited D2D.

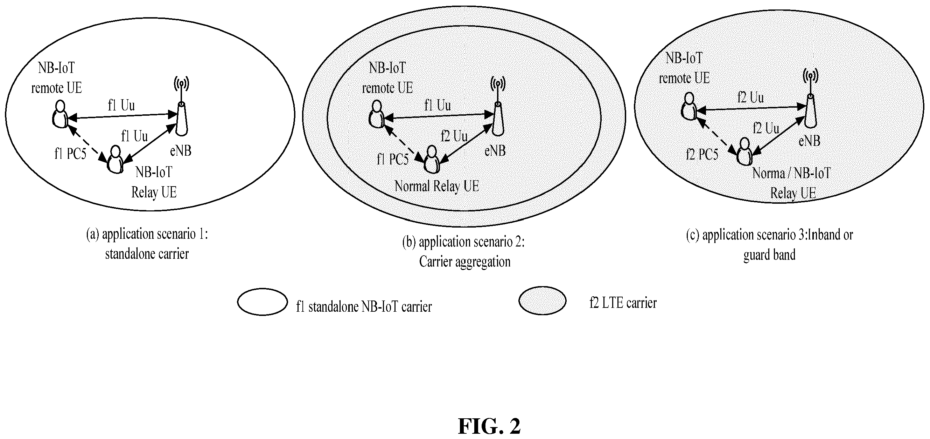

FIG. 2 shows three possible deployment scenarios where the NB-IoT performs data forwarding based on the relay. In FIG. 2(a), the eNB works in a standalone mode. The eNB here may only support the NB-IoT UE, so the relay UE may only be the NB-IoT UE. FIG. 2(b) is a deployment scenario of carrier aggregation. The eNB supports both an LTE carrier and an NB-IoT carrier. The NB-IoT UE may reside on the NB-IoT carrier, and the relay UE may be the normal bandwidth unlimited UE that resides on the LTE carrier. The eNB may configure/allocate for the relay UE the D2D resource on the NB-IoT carrier, so that the relay UE may help the NB-IoT UE to forward data. FIG. 2(c) is an in-band or guard band deployment scenario; that is, the eNB separates a part from LTE carrier resources as the D2D resource, or uses guard band resources not used before as the D2D resource. The relay UE may be the NB-IoT UE or a cellular UE working with a normal bandwidth.

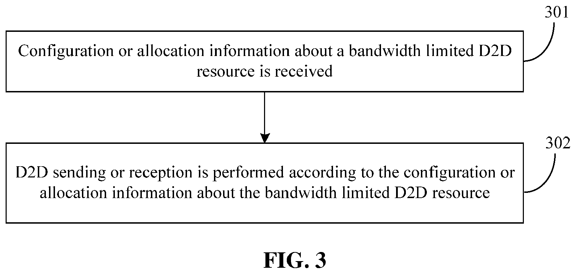

Specifically, for the bandwidth limited UE, the relay UE serving the bandwidth limited UE, and the bandwidth unlimited UE communicating with the bandwidth limited UE, as shown in FIG. 3, the following steps are included.

At S301, configuration or allocation information about a bandwidth limited D2D resource is received.

The bandwidth limited D2D resource is the resource or resource pool for D2D discovery or communication which is configured or allocated on one or more narrow bands. The bandwidth of the resource or resource pool for D2D discovery or communication does not exceed the bandwidth of the narrow band.

In the above solution, the bandwidth of the narrow band includes at least one of 1.4 MHz or 180 MHz.

In the embodiments of the present disclosure, configuration or allocation information about the bandwidth limited D2D resource includes at least one of the following:
the indication of limited bandwidth;
the indication of the existence of the resource for sending or receiving in bandwidth limited D2D discovery or communication;
the resource or resource pool for sending or receiving in bandwidth limited D2D discovery or communication;
an index of the resource pool for sending or receiving in bandwidth limited D2D discovery or communication;
the narrow band corresponding to sending or receiving in the bandwidth limited D2D discovery or communication;
the narrow band corresponding to the resource or resource pool for sending or receiving in bandwidth limited D2D discovery or communication;
the frequency point corresponding to the resource or resource pool for sending or receiving in bandwidth limited D2D discovery or communication;
the PLMN corresponding to the resource or resource pool for sending or receiving in bandwidth limited D2D discovery or communication;
the cell ID corresponding to the resource or resource pool for sending or receiving in bandwidth limited D2D discovery or communication;
the narrow band index corresponding to the resource or resource pool for sending or receiving in bandwidth limited D2D discovery or communication;
the narrow band corresponding to the D2D transmission by the bandwidth limited UE; or
the resource or resource pool for sending or receiving in bandwidth limited D2D discovery or communication corresponding to the resource used for the D2D transmission by the bandwidth limited UE.

In an implementation, the bandwidth limited D2D communication resource or resource pool includes at least one of the following:
the D2D control resource or resource pool; or
the D2D data resource or resource pool.

In the embodiments of the present disclosure, configuration or allocation information about the bandwidth limited D2D resource is received may further include:
the bandwidth limited UE receives configuration or allocation information about the bandwidth limited D2D resource which is sent by the network control unit; and/or,
the bandwidth limited UE acquires configuration or allocation information about the bandwidth limited D2D resource which is preconfigured by the system or is built in the system; and/or,
the bandwidth limited UE receives configuration or allocation information about the bandwidth limited D2D resource which is sent by the relay UE or the opposite-end UE; and/or
the relay UE receives configuration or allocation information about the bandwidth limited D2D resource which is sent by the network control unit; and/or,
the opposite-end UE receives configuration or allocation information about the bandwidth limited D2D resource which is sent by the network control unit; and/or,
the opposite-end UE receives configuration or allocation information about the bandwidth limited D2D resource which is sent by the bandwidth limited UE.

In the above solution, the network control unit includes at least one of the eNB, the ProSe entity, or the MME.

The relay UE and the opposite-end UE satisfy at least one of the following:
the relay UE is UE that supports bandwidth limited D2D discovery or communication, and forwards the data or signaling from the bandwidth limited UE to the network, or forwards the data or signaling from the network to the bandwidth limited UE;
the opposite-end UE is UE that supports the bandwidth limited D2D discovery or communication, and performs the D2D discovery or communication with the bandwidth limited UE; or
the relay UE and the opposite-end UE are UE with the limited bandwidth or the normal bandwidth.

In an implementation, the bandwidth limited UE or the relay UE or the opposite-end UE receives configuration or allocation information about the bandwidth limited D2D resource which is sent by the network control unit may further include:
the bandwidth limited UE or the relay UE or the opposite-end UE receives the configuration or allocation information about the resource or resource pool for sending or receiving in bandwidth limited D2D discovery or communication, which is sent by the network control unit through the system broadcast message; and/or
the bandwidth limited UE or the relay UE or the opposite-end UE receives the configuration or allocation information about the resource or resource pool for sending or receiving in bandwidth limited D2D discovery or communication, which is sent by the network control unit through the proprietary signaling.

In an implementation, before the bandwidth limited UE receives the configuration or allocation information about the resource or resource pool for sending or receiving in bandwidth limited D2D discovery or communication, which is sent by the network control unit through the proprietary signaling, the method further includes:
the bandwidth limited UE or the relay UE or the opposite-end UE sends a bandwidth limited D2D resource configuration or allocation request to the network control unit.

In the above solution, the bandwidth limited D2D resource configuration or allocation request includes at least one of the following:
the indication of limited bandwidth;
the bandwidth limited UE ID;
the bandwidth limited D2D relay indication;
the bandwidth limited D2D unicast indication;
the indication of the relay UE supporting bandwidth limited D2D transmission;
the ID of the relay UE supporting the bandwidth limited D2D transmission;
the ID of the bandwidth limited UE accessing the relay;
the indication of the opposite-end UE supporting bandwidth limited D2D transmission;
the ID of the opposite-end UE supporting the bandwidth limited D2D transmission;
a request for the resource for sending or receiving in bandwidth limited D2D discovery or communication;
the resource or resource pool narrow band for sending or receiving in bandwidth limited D2D discovery or communication;
an index or size of the resource or resource pool narrow band for sending or receiving in bandwidth limited D2D discovery or communication;
the resource or resource pool for sending or receiving in bandwidth limited D2D discovery or communication; or
an index of the resource or resource pool for sending or receiving in bandwidth limited D2D discovery or communication.

The bandwidth limited D2D resource configuration or allocation request is carried through at least one of the following:
the SidelinkUEInformation;
the SL buffer state report information; or
the newly designed RRC proprietary signaling.

Configuration or allocation information about the bandwidth limited D2D resource, which is sent by the relay UE or the opposite-end UE or the bandwidth limited UE, may be carried through at least one of the following:
the relay discovery broadcast information;
the relay discovery response information;
the relay discovery request information;
the D2D discovery broadcast information;
the D2D discovery request information;
the D2D discovery response information;
the direct connection establishment request information;
the direct connection establishment response information;
the PC5 resource allocation information; or
the newly designed PC5 signaling.

In an implementation, before the bandwidth limited UE receives configuration or allocation information about the bandwidth limited D2D resource which is sent by the relay UE or the opposite-end UE, the method further includes: the bandwidth limited UE sends a bandwidth limited D2D communication request to the relay UE or the opposite-end UE; or,
before the opposite-end UE receives configuration or allocation information about the bandwidth limited D2D resource which is sent by the bandwidth limited UE, the method further includes: the opposite-end UE sends the bandwidth limited D2D communication request to the bandwidth limited UE.

In the above solution, the bandwidth limited D2D communication request includes at least one of the following:
the indication of limited bandwidth;
the bandwidth limited UE ID;
the bandwidth limited D2D relay indication;
the bandwidth limited D2D unicast communication indication;
a request the resource for sending or receiving in bandwidth limited D2D discovery or communication;
the resource or resource pool narrow band for sending or receiving in bandwidth limited D2D discovery or communication;
an index or size of the resource or resource pool narrow band for sending or receiving in bandwidth limited D2D discovery or communication;
the resource or resource pool for sending or receiving in bandwidth limited D2D discovery or communication; or
an index of the resource or resource pool for sending or receiving in bandwidth limited D2D discovery or communication.

The bandwidth limited D2D communication request may be carried through at least one of the following:
the relay discovery request information;
the relay discovery broadcast information;
the D2D discovery request information;
the D2D discovery broadcast information;
the direct connection establishment request information;
the PC5 buffer state report; or
the newly designed PC5 signaling.

At S302, the D2D sending or reception is performed according to the configuration or allocation information about the bandwidth limited D2D resource.

In the embodiments of the present disclosure, the D2D reception is performed according to configuration or allocation information about the bandwidth limited D2D resource may further include:
the bandwidth limited UE performs the D2D reception according to a resource pool corresponding to a resource pool for receiving or an index of the resource pool for receiving in bandwidth limited D2D discovery or communication, which is configured by the network control unit or the relay UE or the opposite-end UE; and/or
the bandwidth limited UE performs the D2D reception according to the resource corresponding to a narrow band for receiving or an index of the narrow band for receiving in bandwidth limited D2D discovery or communication, which is configured by the network control unit or the relay UE or the opposite-end UE; and/or
the relay UE or the opposite-end UE performs D2D discovery or communication receiving in all the resource pools for receiving in bandwidth limited D2D discovery or communication; and/or
the bandwidth limited UE or the relay UE or the opposite-end UE selects the first resource pool for receiving in bandwidth limited D2D discovery or communication to perform the D2D discovery or communication receiving; and/or
the bandwidth limited UE performs, in a time division mode, the D2D discovery or communication receiving in all the resource pools for receiving in bandwidth limited D2D discovery or communication.

In the embodiments of the present disclosure, the D2D sending is performed according to configuration or allocation information about the bandwidth limited D2D resource may further include:
the bandwidth limited UE or the relay UE or the opposite-end UE selects a resource from a first resource pool for sending in bandwidth limited D2D discovery or communication, to perform the D2D discovery or communication sending; and/or,
the bandwidth limited UE selects a resource in a resource pool for sending in bandwidth limited D2D discovery or communication which is selected randomly or selected by performing the hash map on an ID of the bandwidth limited UE according to a predefined rule, to perform the D2D discovery or communication sending; and/or,
the bandwidth limited UE uses a narrow band resource corresponding to the bandwidth limited D2D transmission to perform the D2D transmission; and/or,
the relay UE or the opposite-end UE selects, according to narrow band information corresponding to the received resource used for the D2D transmission by the bandwidth limited UE, a resource from a resource pool for sending or receiving in bandwidth limited D2D discovery or communication corresponding to the narrow band, to perform the D2D discovery or communication sending; and/or
the relay UE or the opposite-end UE selects, according to the resource or resource pool for sending or receiving in bandwidth limited D2D discovery or communication corresponding to the received resource used for the D2D transmission by the bandwidth limited UE, a resource from the corresponding resource pool for sending or receiving in bandwidth limited D2D discovery or communication, to perform the D2D discovery or communication sending; and/or
the bandwidth limited UE selects the resource according to a resource pool corresponding to a received resource pool for sending or received index of the resource pool for sending in bandwidth limited D2D discovery or communication, to perform sending; and/or
the bandwidth limited UE selects the resource according to the resource pool corresponding to the received resource narrow band for sending or received index of the resource narrow band for sending in bandwidth limited D2D discovery or communication, to perform sending; and/or
the bandwidth limited UE performs the D2D sending according to a resource for sending in bandwidth limited D2D discovery or communication which is allocated by the network control unit or the relay UE or the opposite-end UE; and/or
the relay UE or the opposite-end UE assembles and configures, according to the resource narrow band corresponding to a resource for sending in bandwidth limited D2D discovery or communication which is allocated by the network control unit, the information about the bandwidth limited UE of the corresponding narrow band, to perform the D2D sending.

Aiming at a variety of communication scenarios of the bandwidth limited UE and a variety of resource allocation modes, the embodiments of the present disclosure provide an implementation process of an application scenario where the bandwidth limited UE performs the D2D discovery or communication.

### First application scenario

The present example considers the scenario where the BL UE forwards data through the relay, and it is assumed that the serving eNB configures only one bandwidth limited D2D discovery or communication resource pool, and supports the resource allocation mode 2.

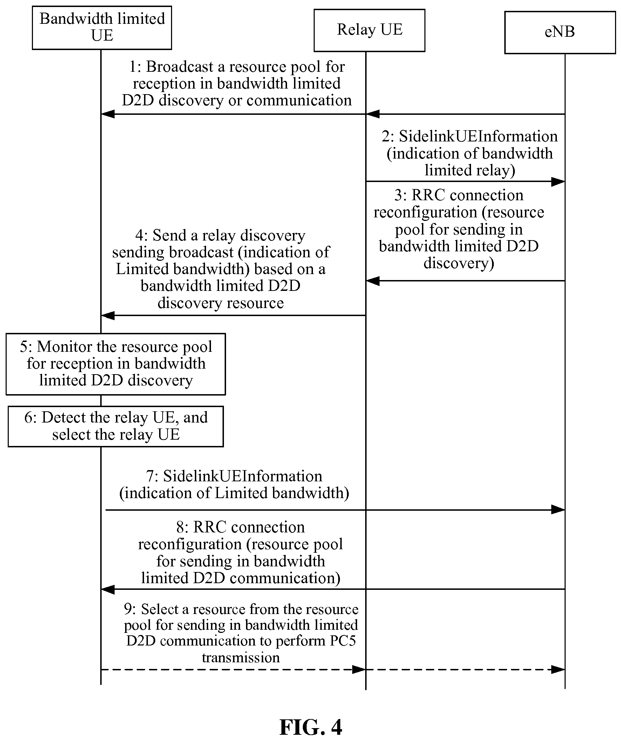

As shown in FIG. 4, after accessing the network, the relay UE supporting the bandwidth limited D2D discovery or communication and supporting a relay function receives configuration information about a D2D discovery receiving resource pool and a D2D communication receiving resource pool, which is sent by the serving eNB through the system broadcast message (for example, SIB18, SIB19, the newly designed SIB). Except a regular period, a sub-frame offset, start of PRB, end of PRB, an PRB offset, and other configuration information, the configuration information about the D2D discovery receiving resource pool and the D2D communication receiving resource pool may further include a corresponding indication about whether each resource pool supports bandwidth limitation and corresponding narrow band information, for example, the bandwidth of the narrow band and the narrow band index.

After receiving the information, if the relay UE hopes to enable the relay function, it sends the SidelinkUEInformation, including the D2D discovery resource request and the bandwidth limited D2D relay indication, to the serving eNB, so as to inform the serving eNB to forward the data for the bandwidth limited UE.

After receiving the SidelinkUEInformation sent by the relay UE, the eNB sends, through an RRC connection reconfiguration message, information about a bandwidth limited D2D discovery sending resource pool to the relay UE. After receiving the information about the bandwidth limited D2D discovery sending resource pool, the relay UE selects randomly a D2D discovery resource from the bandwidth limited D2D discovery sending resource pool, and uses the resource to send relay discovery broadcast information, herein the relay discovery broadcast information carries the indication of limited bandwidth, which indicates the relay UE to forward the data to the network for the bandwidth limited UE.

At the same time, after accessing the network, for saving power, the bandwidth limited eMTC device BL UE hopes to find the relay UE around to help to forward an uplink data packet to the network. The eNB that the BL UE accesses carries, in the system broadcast message (for example, the SIB18 and the SIB19) transmitted through the narrow band, the information about the bandwidth limited D2D discovery receiving resource pool and the bandwidth limited D2 communication receiving resource pool. Except the regular period, the sub-frame offset, the start of PRB, the end of PRB, the PRB offset, and other configuration information, the information about the bandwidth limited D2D discovery receiving resource pool and the bandwidth limited D2 communication receiving resource pool may further include: the indication of limited bandwidth and the corresponding narrow band information. After receiving the information, the bandwidth limited UE monitors bandwidth limited D2D discovery receiving resource pool.

It is assumed that the BL UE monitors the relay discovery broadcast information sent by the relay UE, and selects the relay to forward the data packet. The BL UE needs to perform the D2D communication with the relay UE, and establish a PC5 direct connection. If the PC5 direct connection is established successfully, the BL UE sends the data packet to the relay UE through the D2D communication, and then the relay UE forwards the data packet to the network. But before this, the BL UE first needs to acquire a bandwidth limited D2D communication sending resource. The bandwidth limited BL UE sends the SidelinkUEInformation to the eNB, herein the SidelinkUEInformation carries a communication resource configuration request. Alternatively, the SidelinkUEInformation may also carry the indication of limited bandwidth. After receiving the SidelinkUEInformation sent by the BL UE, the eNB sends, through the RRC connection reconfiguration message, information about a bandwidth limited D2D communication sending resource pool to the BL UE. After receiving the information about the bandwidth limited D2D communication sending resource pool, the BL UE selects randomly a D2D control and data resource from the bandwidth limited D2D communication sending resource pool, and uses the resource to send a direct connection establishment request and the data packet that it hopes the relay UE to forward to the network.

### Second application scenario

The present example considers the scenario where the BL UE performs the D2D communication with opposite-end BL UE, and it is assumed that the serving eNB configures only one bandwidth limited D2D discovery or communication resource pool, and supports the resource allocation mode 1.

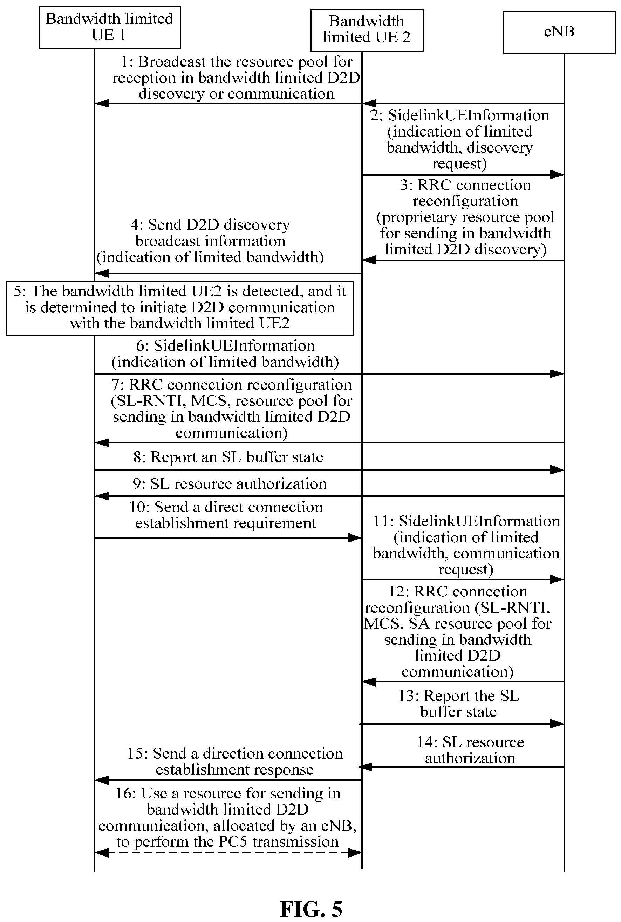

As shown in FIG. 5, after accessing the network, the BL UE1 and the BL UE2 supporting a bandwidth limited D2D discovery or communication function receive the configuration information about the D2D discovery receiving resource pool and the D2D communication receiving resource pool, which is sent by the serving eNB through the system broadcast message (for example, the SIB18, the SIB19, or the newly designed SIB). Except the regular period, the sub-frame offset, the start of PRB, the end of PRB, the PRB offset, and other configuration information, the configuration information about the D2D discovery receiving resource pool and the D2D communication receiving resource pool may further include the corresponding indication about whether each resource pool supports bandwidth limitation and the corresponding narrow band information, for example, the bandwidth of the narrow band and the narrow band index.

After receiving the information, if the BL UE2 hopes to start the D2D discovery, it sends the SidelinkUEInformation to the serving eNB. The SidelinkUEInformation includes the D2D discovery resource request and the bandwidth limited UE ID. Alternatively, the SidelinkUEInformation may also carry the indication of limited bandwidth. Moreover, the eNB may also determine that the BL UE2 is the bandwidth limited UE through capability information about the BL UE2 during accessing.

After receiving the SidelinkUEInformation sent by the BL UE2, the eNB sends, through the RRC connection reconfiguration message, the bandwidth limited D2D discovery sending resource, which is allocated to the BL UE2, to the BL UE2. After receiving the bandwidth limited D2D discovery sending resource allocated by the eNB, the BL UE2 uses the resource to send the D2D discovery broadcast information. The D2D discovery broadcast information carries the indication of limited bandwidth, which indicates that the BL UE2 is the bandwidth limited UE, and only the bandwidth limited D2D discovery and communication is supported.

At the same time, after acquiring the information about the bandwidth limited D2D discovery receiving resource pool from the system broadcast information, the bandwidth limited device BL UE1 monitors the bandwidth limited D2D discovery receiving resource pool. It is assumed that the BL UE1 monitors the D2D discovery broadcast information sent by the BL UE2, and decides to initiate unicast communication with the BL UE2. When the BL UE1 performs the D2D communication with the BL UE2, it is needed to first establish the PC5 direct connection; if the PC5 direct connection is established successfully, then the BL UE1 and the BL UE2 transmit data through the D2D communication. But before this, the BL UE1 first needs to acquire the bandwidth limited D2D communication sending resource. The bandwidth limited BL UE1 sends the SidelinkUEInformation to the eNB, herein the SidelinkUEInformation carries the bandwidth limited D2D communication resource configuration request. Alternatively, the SidelinkUEInformation may also carry the indication of limited bandwidth. After receiving the SidelinkUEInformation sent by the BL UE1, the eNB sends, through the RRC connection reconfiguration message, the configuration information about the bandwidth limited D2D communication sending resource to the BL UE1. It is assumed that the eNB supports the resource allocation mode 1, the configuration information about the D2D communication resource which is sent to the BL UE1 by the eNB may include SL-RNTI, MCS, bandwidth limited D2D communication control information sending resource pool, and so on. After receiving the configuration information about the bandwidth limited D2D communication sending resource, the BL UE1 sends the SL BSR to the eNB. After receiving the SL BSR, the eNB sends SL grant to the BL UE1 to indicate the private D2D communication resource allocated to the BL UE1. After receiving the private D2D communication resource allocated by the eNB, the BL UE1 uses the resource to send the direct connection establishment request to the BL UE2.

After receiving the direct connection establishment request sent by the BL UE1, the BL UE2 accepts a unicast communication request of the BL UE1, and sends a direct connection establishing response information to the BL UE1. Before this, the BL UE2 needs to acquire the bandwidth limited D2D communication sending resource from the eNB, and the BL UE2 sends the SidelinkUEInformation to the eNB, herein the information carries the bandwidth limited D2D communication resource configuration request. After receiving the SidelinkUEInformation sent by the BL UE2, the eNB sends, through the RRC connection reconfiguration message, the configuration information about the bandwidth limited D2D communication sending resource to the BL UE2. It is assumed that the eNB supports the resource allocation mode 1, the configuration information about the D2D communication resource which is sent to the BL UE2 by the eNB may include the SL-RNTI, the MCS, the bandwidth limited D2D communication control information sending resource pool, and so on. After receiving the configuration information about the bandwidth limited D2D communication sending resource, the BL UE2 sends the SL BSR to the eNB. After receiving the SL BSR, the eNB sends the SL grant to the BL UE2 to indicate the private D2D communication resource allocated to the BL UE2. After receiving the private D2D communication resource allocated by the eNB, the BL UE2 uses the resource to send a direct connection establishment response to the BL UE1. After that, the BL UE1 and the BL UE2 may continue to request to the eNB for the bandwidth limited D2D communication sending resource, and perform the D2D data transmission at a PC5 interface.

### Third application scenario

The present example considers the scenario where the BL UE forwards data through the relay, and it is assumed that the serving eNB configures only one bandwidth limited D2D discovery resource pool, but configures a plurality of bandwidth limited D2D communication source pools, and supports the resource allocation mode 1.

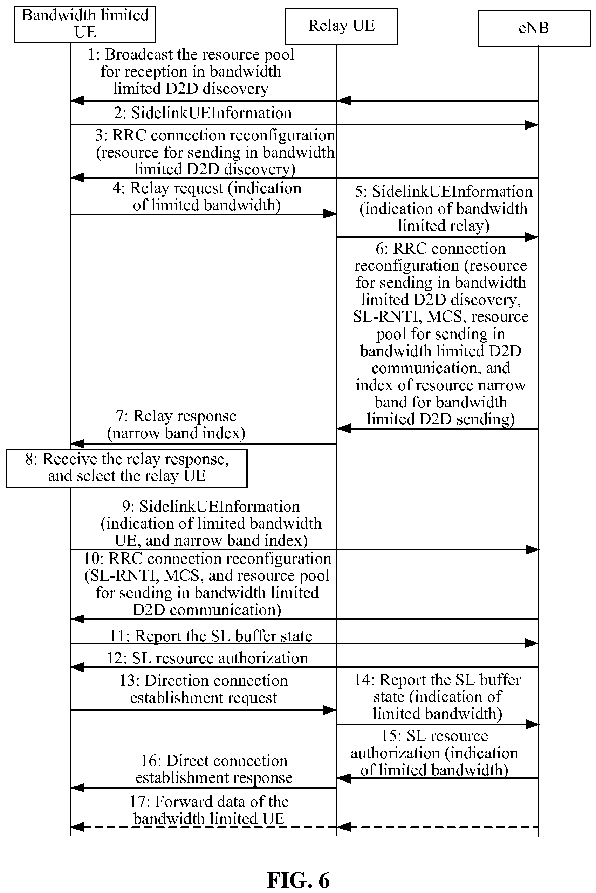

After accessing the network, for saving power, the bandwidth limited device BL UE hopes to find the relay UE around to help to forward a downlink data packet. As shown in FIG. 6, the eNB that the BL UE accesses carries, in the system broadcast message (for example, the SIB18, the SIB19, or the newly designed SIB) transmitted through the narrow band, the information about the bandwidth limited D2D discovery receiving resource pool and the bandwidth limited D2 communication receiving resource pool. Except the regular period, the sub-frame offset, the start of PRB, the end of PRB, the PRB offset, and other configuration information, the information about the bandwidth limited D2D discovery receiving resource pool and the bandwidth limited D2 communication receiving resource pool may further include: the indication of limited bandwidth and the corresponding narrow band information.

If the BL UE hopes to actively send relay request information to look for the relay UE around, it sends the SidelinkUEInformation to the serving eNB. The SidelinkUEInformation includes the D2D discovery resource request and the bandwidth limited UE ID. Alternatively, the SidelinkUEInformation may also carry the indication of limited bandwidth. Moreover, the eNB may also determine that the BL UE is the bandwidth limited UE through the capability information about the BL UE during accessing.

After receiving the SidelinkUEInformation sent by the BL UE, the eNB sends, through the RRC connection reconfiguration message, the bandwidth limited D2D discovery sending resource, which is allocated to the BL UE, to the BL UE. After receiving the bandwidth limited D2D discovery sending resource allocated by the eNB, the BL UE uses the resource to send the relay request information. The relay request information may carry the indication of limited bandwidth, which indicates the BL UE to look for the relay supporting the bandwidth limited D2D communication.

After accessing the network, the relay UE supporting the bandwidth limited D2D discovery or communication and supporting the relay function receives the configuration information about the D2D discovery receiving resource pool and the D2D communication receiving resource pool, which is sent by the serving eNB through the system broadcast message (for example, the SIB18, the SIB19, or the newly designed SIB). The relay UE monitors the D2D discovery receiving resource pool, and receives the relay request information sent by the BL UE. If the relay UE hopes to help the BL UE to forward the data, the relay UE sends the SidelinkUEInformation to the serving eNB, herein the SidelinkUEInformation includes the D2D discovery resource request, the D2D communication resource request, the bandwidth limited UE ID requesting for accessing the relay to forward the data, and the bandwidth limited D2D relay indication, so as to inform the serving eNB to forward the data for the bandwidth limited UE.

After receiving the SidelinkUEInformation sent by the relay UE, the eNB allocates the bandwidth limited D2D discovery sending resource for the relay UE, selects for the relay UE the narrow band corresponding to the data forwarding and the configuration of the D2D communication sending resource configuration on the corresponding narrow band, and then sends, through the RRC connection reconfiguration message, the configuration about the bandwidth limited D2D discovery sending resource and the bandwidth limited D2D communication sending resource, which are allocated to the relay UE, to the relay UE. Specifically, the D2D communication resource configuration information which is sent to the relay UE by the eNB may include the SL-RNTI, the MCS, the bandwidth limited D2D communication control information sending resource pool, the narrow band index corresponding to the bandwidth limited D2D communication sending resource, and so on.

After receiving the RRC connection reconfiguration message sent by the eNB, the relay UE uses the bandwidth limited D2D discovery sending resource allocated by the eNB to send relay response information, herein the relay response carries information about the narrow band index corresponding to the follow-up D2D communication.

IF the BL UE monitors the relay response information sent by the relay UE, and selects the relay to forward the data packet, the BL UE sends, according to narrow band index of the D2D resource corresponding to the follow-up D2D communication which is included in the relay response, to the eNB the SidelinkUEInformation carrying the D2D communication resource narrow band index and the D2D communication resource configuration request. After receiving the SidelinkUEInformation sent by the BL UE, the eNB sends, through the RRC connection reconfiguration message, the configuration information about the bandwidth limited D2D communication sending resource on the corresponding narrow band to the BL UE. Moreover, the RRC connection reconfiguration message may also include the information about the D2D communication receiving resource pool on the narrow band corresponding to the narrow band index that the BL UE requests for. The D2D communication receiving resource pool corresponds to the D2D communication sending resource pool on a D2D communication narrow band which is configured for the relay UE by the eNB. After receiving the configuration information about the bandwidth limited D2D communication sending resource which is sent by the eNB, the BL UE sends the SL BSR to the eNB. After receiving the SL BSR, the eNB sends the SL grant to the BL UE to indicate the private D2D communication resource allocated to the BL UE. After receiving the private D2D communication resource allocated by the eNB, the BL UE uses the resource to send the direct connection establishment request to the relay UE.

After receiving the direct connection establishment request which is sent by the BL UE, the relay UE sends the SL BSR to the eNB. After receiving the SL BSR, the eNB sends the SL grant to the relay UE, so as to allocate to the relay UE the private D2D communication resource which corresponds to the narrow band and is allocated to the relay UE. After receiving the private D2D communication resource allocated by the eNB, the relay UE uses the resource to send the direct connection establishment response to the BLUE.

The BL UE finds the corresponding receiving resource pool according to the D2D communication narrow band which is received in the stage of relay discovery before, or monitors the bandwidth limited D2D communication receiving resource pool according to the information about the D2D communication receiving resource pool which is received in the stage of relay discovery, and receives the direct connection establishment response information sent by the relay UE; then, a PC5 direct link is established successfully. The BL UE continues monitoring the resource pool, and may receive the downlink data packet which is to be forwarded to the BL UE by the relay UE.

### Fourth application scenario

The present example considers the scenario where the BL UE forwards data through the relay, and it is assumed that the serving eNB configures only one bandwidth limited D2D discovery or communication resource pool, but configures a plurality of bandwidth limited D2D communication source pools, and supports the resource allocation mode 2.

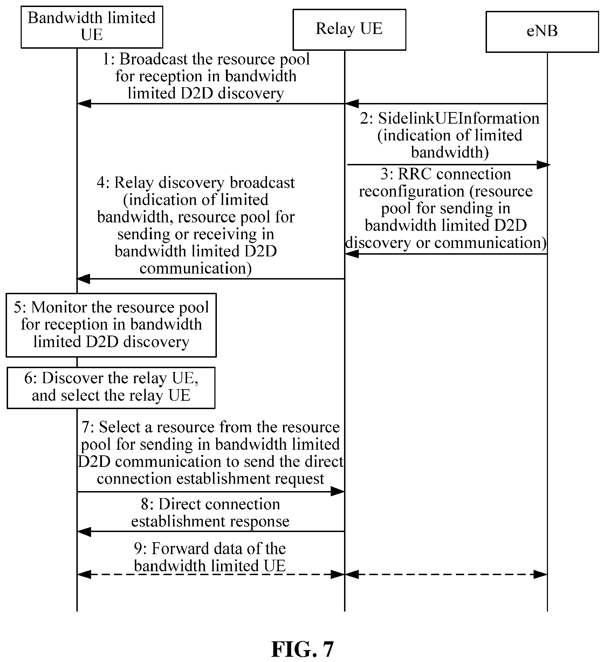

As shown in FIG. 7, after accessing the network, the relay UE supporting the bandwidth limited D2D discovery or communication and supporting the relay function receives configuration information about the D2D discovery receiving resource pool and the D2D communication receiving resource pool, which is sent by the serving eNB through the system broadcast message (for example, the SIB18, the SIB19, or the newly designed SIB). Except the regular period, the sub-frame offset, the start of PRB, the end of PRB, the PRB offset, and other configuration information, the configuration information about the D2D discovery receiving resource pool and the D2D communication receiving resource pool may further include the corresponding indication about whether each resource pool supports bandwidth limitation and the corresponding narrow band information, for example, the bandwidth of the narrow band and the narrow band index.

After receiving the information, if the relay UE hopes to enable the relay function, it sends the SidelinkUEInformation, including the D2D discovery resource request, the D2D communication resource request, and the bandwidth limited D2D relay indication, to the serving eNB, so as to inform the serving eNB to forward the data for the bandwidth limited UE.

After receiving the SidelinkUEInformation sent by the relay UE, the eNB sends, through an RRC connection reconfiguration message, the information about the resource pool for sending in bandwidth limited D2D discovery or communication to the relay UE. After receiving the information about the bandwidth limited D2D discovery sending resource pool, the relay UE selects randomly a D2D discovery resource from the bandwidth limited D2D discovery sending resource pool, and uses the resource to send the relay discovery broadcast information, herein the relay discovery broadcast information carries the indication of limited bandwidth, which indicates the relay UE to forward the data to the network for the bandwidth limited UE. Moreover, the relay discovery broadcast information may also carry the information about the resource pool for sending or receiving in bandwidth limited D2D communication, which the BL UE accessing the relay UE may use, or the resource pool index.

At the same time, after accessing the network, for saving power, the bandwidth limited device BL UE hopes to find the relay UE around to help to forward the uplink data packet to the network. The eNB that the BL UE accesses carries, in the system broadcast message (for example, the SIB18, the SIB19, or the newly designed SIB) transmitted through the narrow band, the information about the bandwidth limited D2D discovery receiving resource pool and the bandwidth limited D2 communication receiving resource pool. Except the regular period, the sub-frame offset, the start of PRB, the end of PRB, the PRB offset, and other configuration information, the information about the bandwidth limited D2D discovery receiving resource pool and the bandwidth limited D2 communication receiving resource pool may further include: the indication of limited bandwidth and the corresponding narrow band information. After receiving the information, the bandwidth limited UE monitors the bandwidth limited D2D discovery receiving resource pool.

If the BL UE monitors the relay discovery broadcast information sent by the relay UE, and selects the relay to forward the data packet, the BL UE selects, according to the information about the bandwidth limited D2D communication sending resource pool which is carried in a relay discovery broadcast, the D2D communication sending resource to send information about the direct connection establishment request. After receiving the information, the relay UE selects, according to the bandwidth limited D2D communication sending resource pool which is allocated by the base station, the resource to send the direct connection establishment response information.

The BL UE monitors, according to the information about the bandwidth limited D2D communication receiving resource pool which is carried in the relay discovery broadcast information, the corresponding receiving resource pool. If the direct connection establishment response information sent by the relay UE is received, the PC5 connection is established successfully; then, the BL UE sends the data packet to the relay UE through the D2D communication, and the relay UE forwards the data packet to the network, or the relay UE receives the data packet forwarded from the network.

### Fifth application scenario

The present example considers the scenario where the BL UE forwards data through the relay, and it is assumed that the serving eNB configures a plurality of bandwidth limited D2D discovery resource pools and a plurality of bandwidth limited D2D communication source pools, and supports the resource allocation mode 1.

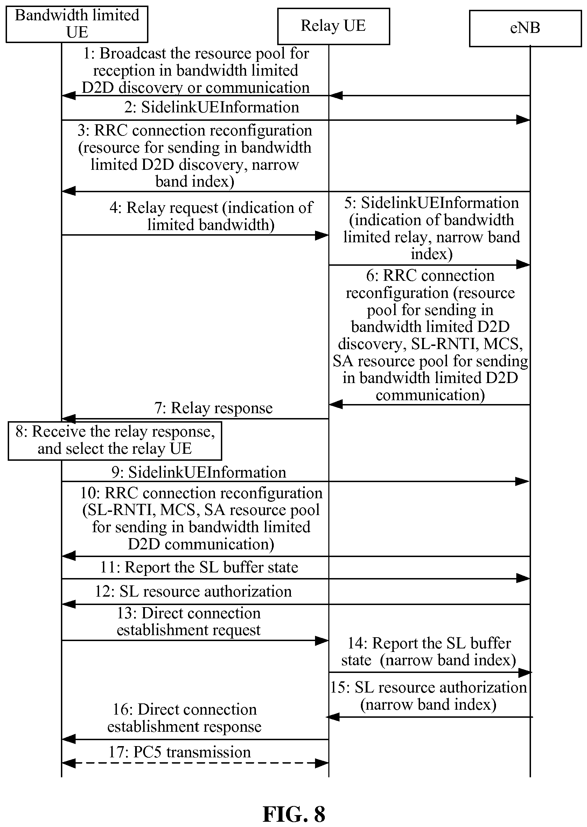

After accessing the network, for saving power, the bandwidth limited device BL UE hopes to find the relay UE around to help to forward the downlink data packet. As shown in FIG. 8, the eNB that the BL UE accesses carries, in the system broadcast message (for example, the SIB18, the SIB19, or the newly designed SIB) transmitted through the narrow band, the information about the bandwidth limited D2D discovery receiving resource pool and the bandwidth limited D2 communication receiving resource pool. Except the regular period, the sub-frame offset, the start of PRB, the end of PRB, the PRB offset, and other configuration information, the information about the bandwidth limited D2D discovery receiving resource pool and the bandwidth limited D2 communication receiving resource pool may further include: the indication of limited bandwidth and the corresponding information related to the narrow band, for example, the narrow band index.

If the BL UE hopes to actively send the relay request information to look for the relay UE around, it sends the SidelinkUEInformation to the serving eNB, herein the SidelinkUEInformation includes the D2D discovery resource request. The eNB may also determine that the BL UE is the bandwidth limited UE through the capability information about the BL UE during accessing.

After receiving the SidelinkUEInformation sent by the BL UE, the eNB determines a D2D transmission work narrow band of the BL UE, and allocates for the BL UE the D2D proprietary discovery resource on this narrow band; then, the eNB sends to the BL UE, through the RRC connection reconfiguration message, the D2D transmission narrow band information allocated to the BL UE and the bandwidth limited D2D discovery sending resource on the corresponding narrow band. After receiving the bandwidth limited D2D discovery sending resource allocated by the eNB, the BL UE uses the resource to send the relay request information. The relay request information may carry the indication of limited bandwidth, which indicates the BL UE to look for the relay supporting the bandwidth limited D2D communication.

After accessing the network, the relay UE supporting the bandwidth limited D2D discovery or communication and supporting the relay function receives the configuration information about the D2D discovery receiving resource pool and the D2D communication receiving resource pool, which is sent by the serving eNB through the system broadcast message (for example, the SIB18, the SIB19, or the newly designed SIB). The relay UE monitors all D2D discovery receiving resource pools, receives the relay request information sent by the BL UE, and determines, according to the D2D discovery resource used for the relay request information sent by the BL UE, the narrow band corresponding to the D2D transmission performed by the BL UE. If the relay UE may forward the data for the BL UE, the relay UE sends the SidelinkUEInformation to the serving eNB, herein the SidelinkUEInformation includes the D2D discovery resource request, the D2D communication resource request, the bandwidth limited BL UE ID requesting for accessing the relay to forward the data, and the bandwidth limited D2D relay indication, so as to inform the serving eNB to forward the data for the bandwidth limited UE. Moreover, the SidelinkUEInformation may also include the narrow band information that the relay hopes to perform the bandwidth limited D2D discovery transmission with the BL UE, for example, the narrow band index.

After receiving the SidelinkUEInformation sent by the relay UE, the eNB allocates for the relay UE the bandwidth limited D2D discovery sending resource on the narrow band that the relay UE hopes, configures for the relay UE the D2D communication sending resource on the corresponding narrow band, and then sends, through the RRC connection reconfiguration message, the configuration about the bandwidth limited D2D discovery sending resource on the corresponding narrow band and the bandwidth limited D2D communication sending resource, which are allocated to the relay UE, to the relay UE. Specifically, the configuration information about the D2D communication resource which is sent to the relay UE by the eNB may include the SL-RNTI, the MCS, the bandwidth limited D2D communication control information sending resource pool, and so on.

After receiving the RRC connection reconfiguration message which is sent by the eNB, the relay UE uses the bandwidth limited D2D discovery sending resource allocated by the eNB to send the relay response information.

The BL UE continues monitoring the D2D discovery receiving resource pool on the D2D transmission work narrow band which is configured by the eNB. If the BL UE monitors the relay response information sent by the relay UE, and selects the relay to forward the data packet, the BL UE sends to the eNB the SidelinkUEInformation carrying the D2D communication resource configuration request. After receiving the SidelinkUEInformation sent by the BL UE, the eNB sends, through the RRC connection reconfiguration message, the configuration information about the bandwidth limited D2D communication sending resource on the corresponding narrow band to the BL UE.

After receiving the configuration information about the bandwidth limited D2D communication sending resource which is sent by the eNB, the BL UE sends the SL BSR to the eNB. After receiving the SL BSR, the eNB sends the SL grant to the BL UE to indicate the private D2D communication resource allocated to the BL UE. After receiving the private D2D communication resource allocated by the eNB, the BL UE uses the resource to send the direct connection establishment request to the relay UE.

After receiving the direct connection establishment request which is sent by the BL UE, the relay UE sends the SL BSR carrying the narrow band index to the eNB. After receiving the SL BSR, the eNB allocates for the relay UE the D2D communication sending resource on the corresponding narrow band, and sends the SL grant carrying the narrow band index information to the relay UE. After receiving the private D2D communication sending resource allocated by the eNB, the relay UE uses the resource to send the direct connection establishment response to the BL UE.

The BL UE continues monitoring the D2D communication receiving resource pool on the D2D transmission work narrow band configured by the eNB, and receives the direct connection establishment response information sent by the relay UE; then, the PC5 direct link is established successfully. The BL UE may continue to request to the eNB for the bandwidth limited D2D communication sending resource, and sends data and/or control signaling to the relay through PC5 communication; and then, the relay forwards the data and/or the control signaling to the network.

### Sixth application scenario

The present example considers the scenario where the BL UE performs the D2D communication with the bandwidth unlimited UE on the opposite end, and it is assumed that the serving eNB configures a plurality of bandwidth limited D2D discovery or communication resource pools, and supports the resource allocation mode 2. The bandwidth unlimited UE may also use the bandwidth limited D2D discovery or communication resource pool.

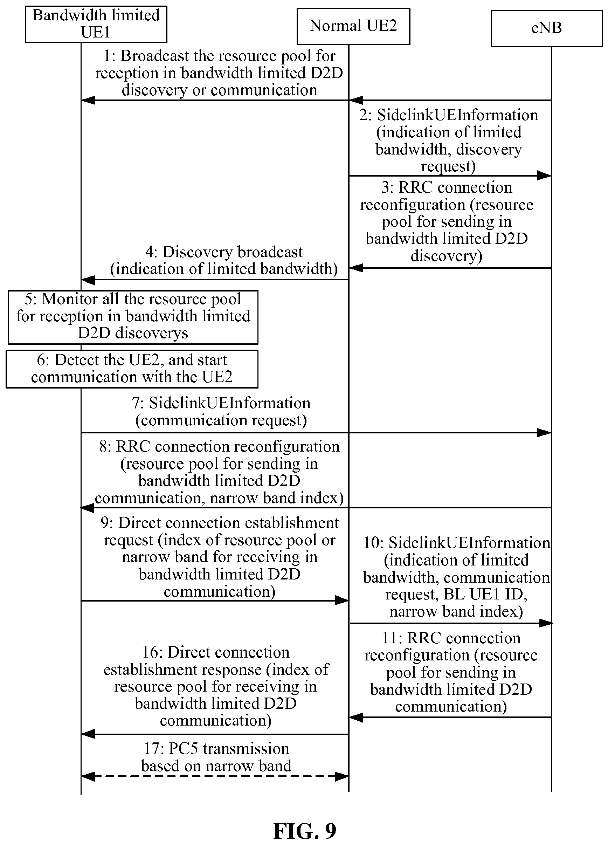

As shown in FIG. 9, after accessing the network, the BL UE1 and the bandwidth unlimited normal UE2 supporting the bandwidth limited D2D discovery or communication function receive the configuration information about the D2D discovery receiving resource pool and the D2D communication receiving resource pool, which is sent by the serving eNB through the system broadcast message (for example, SIB18, SIB19, the newly designed SIB). Except the regular period, the sub-frame offset, the start of PRB, the end of PRB, the PRB offset, and other configuration information, the configuration information about the D2D discovery receiving resource pool and the D2D communication receiving resource pool may further include the corresponding indication about whether each resource pool supports bandwidth limitation, and the corresponding narrow band information, for example, the bandwidth of the narrow band and the narrow band index.

After receiving the information, if the normal UE2 hopes to start the bandwidth limited D2D discovery, it sends the SidelinkUEInformation to the serving eNB. The SidelinkUEInformation includes the D2D discovery resource request, a bandwidth limited normal UE2 ID, and the indication of limited bandwidth. The indication of limited bandwidth is used for indicating the eNB to allocate the bandwidth limited D2D discovery sending resource.

After receiving the SidelinkUEInformation sent by the normal UE2, the eNB sends, through the RRC connection reconfiguration message, the information about the bandwidth limited D2D discovery sending resource pool, which is allocated to the normal UE2, to the normal UE2. After receiving the bandwidth limited D2D discovery sending resource pool allocated by the eNB, the normal UE selects the D2D discovery resource from the resource pool to send the D2D discovery broadcast information. The D2D discovery broadcast information carries the indication of limited bandwidth, which indicates that the normal UE2 supports the bandwidth limited D2D discovery and communication.

At the same time, after acquiring the information about the bandwidth limited D2D discovery receiving resource pool from the system broadcast information, the bandwidth limited device BL UE1 monitors all the bandwidth limited D2D discovery receiving resource pools. If the BL UE1 monitors the D2D discovery broadcast information sent by the normal UE2, and decides to initiate the unicast communication with the normal UE2, the bandwidth limited BL UE1 sends the SidelinkUEInformation to the eNB, herein the SidelinkUEInformation carries the bandwidth limited D2D communication resource configuration request.

After receiving the SidelinkUEInformation sent by the BL UE1, the eNB determines, through the capability information of the BL UE1 during accessing or a CCCH ID, that the BL UE1 is the bandwidth limited UE; so, the eNB configures for the BL UE1 the D2D communication work narrow band and the D2D communication sending resource pool on the corresponding narrow band, and sends, through the RRC connection reconfiguration message, the D2D communication work narrow band index and the information about the D2D communication sending resource pool on the corresponding narrow band to the BL UE1. After receiving the bandwidth limited D2D communication sending resource pool and the configuration of the D2D communication narrow band, the BL UE1 selects the D2D communication sending resource, and uses the resource to send the direct connection establishment request to the normal UE2. The direct connection establishment request may include the D2D communication receiving resource pool index hoped to be monitored by the normal UE2 or the narrow band index corresponding to the D2D communication sending performed by the BL UE1.

After monitoring all the D2D communication receiving resource pools, and receiving the direct connection establishment request sent by the BL UE1, the normal UE2 accepts the unicast communication request of the BL UE1, and sends the direct connection establishment response information to the BL UE1. Before this, the normal UE2 needs to acquire the bandwidth limited D2D communication sending resource from the eNB. The normal UE2 sends the SidelinkUEInformation to the eNB, herein the SidelinkUEInformation carries the bandwidth limited D2D communication resource configuration request, an opposite-end BL UE1 ID, and the information about the narrow band corresponding to the D2D communication sending resource hoped to be allocated. After receiving the SidelinkUEInformation sent by the normal UE2, the eNB sends, through the RRC connection reconfiguration message, the information about the bandwidth limited D2D communication sending resource pool corresponding to the narrow band to the normal UE2. After receiving the information about the bandwidth limited D2D communication sending resource pool, the normal UE2 selects the resource from the resource pool, and uses the resource the send the direct connection establishment response to the BL UE1, herein the direct connection establishment response may carry the bandwidth limited D2D communication receiving resource pool index needed to be monitored by the BL UE1. After that, the BL UE1 and the normal UE2 may start PC5 unicast communication.

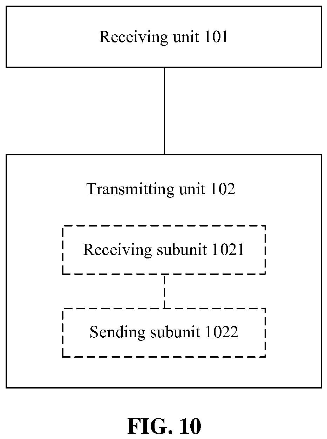

FIG. 10 is a composition diagram of the bandwidth limited device according to an embodiment of the present disclosure. As shown in FIG. 10, the device includes: a receiving unit 101 and a transmitting unit 102.

The receiving unit 101 is configured to receive configuration or allocation information about the bandwidth limited D2D resource.

The transmitting unit 102 is configured to perform the D2D sending or reception according to configuration or allocation information about the bandwidth limited D2D resource.

Configuration or allocation information about the bandwidth limited D2D resource includes at least one of the following:
the indication of limited bandwidth;
the indication of the existence of the resource for sending or receiving in bandwidth limited D2D discovery or communication;
the resource or resource pool for sending or receiving in bandwidth limited D2D discovery or communication;
an index of the resource pool for sending or receiving in bandwidth limited D2D discovery or communication;
the narrow band corresponding to sending or receiving in the bandwidth limited D2D discovery or communication;
the narrow band corresponding to the resource or resource pool for sending or receiving in bandwidth limited D2D discovery or communication;
the frequency point corresponding to the resource or resource pool for sending or receiving in bandwidth limited D2D discovery or communication;
the PLMN corresponding to the resource or resource pool for sending or receiving in bandwidth limited D2D discovery or communication;
the cell ID corresponding to the resource or resource pool for sending or receiving in bandwidth limited D2D discovery or communication;
the narrow band index corresponding to the resource or resource pool for sending or receiving in bandwidth limited D2D discovery or communication;
the narrow band corresponding to the D2D transmission by the bandwidth limited UE; or
the resource or resource pool for sending or receiving in bandwidth limited D2D discovery or communication corresponding to the resource used for the D2D transmission by the bandwidth limited UE.

The bandwidth limited device is the bandwidth limited UE; correspondingly, the receiving unit 101 is further configured to receive configuration or allocation information about the bandwidth limited D2D resource which is sent by the network control unit; and/or, acquire configuration or allocation information about the bandwidth limited D2D resource which is preconfigured by the system or is built in the system; and/or, receive configuration or allocation information about the bandwidth limited D2D resource which is sent by the relay UE or the opposite-end UE.

The bandwidth limited device is the relay UE, correspondingly the receiving unit 101 is further configured to receive configuration or allocation information about the bandwidth limited D2D resource which is sent by the network control unit.

The bandwidth limited device is the opposite-end UE, correspondingly the receiving unit 101 is further configured to receive configuration or allocation information about the bandwidth limited D2D resource which is sent by the network control unit; and/or, receive configuration or allocation information about the bandwidth limited D2D resource which is sent by the bandwidth limited UE.

The transmitting unit 102 includes: a receiving subunit 1021.

The bandwidth limited device is the bandwidth limited UE, correspondingly the receiving subunit 1021 is configured to perform the D2D reception according to a resource pool corresponding to the resource pool for receiving or the index of the resource pool for receiving in bandwidth limited D2D discovery or communication, which is configured by the network control unit or the relay UE or the opposite-end UE; and/or perform the D2D reception according to a resource corresponding to the narrow band for receiving or the index of the narrow band for receiving in bandwidth limited D2D discovery or communication, which is configured by the network control unit or the relay UE or the opposite-end UE; and/or, select the first resource pool for receiving in bandwidth limited D2D discovery or communication to perform the D2D discovery or communication receiving; and/or perform in a time division mode the D2D discovery or communication receiving in all the resource pools for receiving in bandwidth limited D2D discovery or communication.

The bandwidth limited device is the relay UE or the opposite-end UE, correspondingly the receiving subunit 1021 is configured to perform the D2D discovery or communication receiving in all the resource pools for receiving in bandwidth limited D2D discovery or communication; and/or, select the first resource pool for receiving in bandwidth limited D2D discovery or communication to perform the D2D discovery or communication receiving.

The transmitting unit 102 includes: a sending subunit 1022.

The bandwidth limited device is the bandwidth limited UE or the relay UE or the opposite-end UE, correspondingly the sending subunit 1022 is configured to select a resource from a first resource pool for sending in bandwidth limited D2D discovery or communication, to perform the D2D discovery or communication sending.

The bandwidth limited device is the bandwidth limited UE, correspondingly the sending subunit 1022 is configured to select a resource from a resource pool for sending in bandwidth limited D2D discovery or communication which is selected randomly or selected by performing the hash map on the bandwidth limited UE ID according to a predefined rule, to perform the D2D discovery or communication sending; and/or, use the narrow band resource corresponding to the bandwidth limited D2D transmission to perform the D2D transmission.

The bandwidth limited device is the relay UE or the opposite-end UE, correspondingly the sending subunit 1022 is configured to select, according to the narrow band information corresponding to the received resource used for the D2D transmission by the bandwidth limited UE, a resource from the resource pool for sending or receiving in bandwidth limited D2D discovery or communication corresponding to the narrow band, to perform the D2D discovery or communication sending; and/or, select, according to the resource or resource pool for sending or receiving in bandwidth limited D2D discovery or communication corresponding to the received resource used for the D2D transmission by the bandwidth limited UE, a resource from the corresponding resource pool for sending or receiving in bandwidth limited D2D discovery or communication, to perform the D2D discovery or communication sending.

The bandwidth limited device is the bandwidth limited UE, correspondingly the sending subunit 1022 is configured to select, according to a resource pool corresponding to a received resource pool for sending or received index of the resource pool for sending in bandwidth limited D2D discovery or communication, the resource to perform sending; and/or, select, according to the resource pool corresponding to the received resource narrow band for sending or received index of the resource narrow band for sending in bandwidth limited D2D discovery or communication, the resource to perform sending; and/or, perform the D2D sending according to a resource for sending in bandwidth limited D2D discovery or communication which is allocated by the network control unit or the relay UE or the opposite-end UE.

The bandwidth limited device is the relay UE or the opposite-end UE, correspondingly the sending subunit 1022 is configured to assemble and configure, according to the resource narrow band corresponding to a resource for sending in bandwidth limited D2D discovery or communication which is allocated by the network control unit, the information about the bandwidth limited UE of the corresponding narrow band, to perform the D2D sending.

In practical applications, all the functions implemented by the units in the bandwidth limited device may be implemented by a Central Processing Unit (CPU), or a Micro Processor Unit (MPU), or a Digital Signal Processor (DSP), or a Field Programmable Gate Array (FPGA) in the bandwidth limited device.

It is to be noted that the description of the embodiment of the device is similar to the description of the embodiment of the method, and the beneficial effects of the embodiment of the device are as same as that of the embodiment of the method, so they will not be repeated here. For the technical details undisclosed in the embodiment of the device in the present disclosure, refer to the description of the embodiment of the method for understanding; so they will not be repeated here for saving space.

Those skilled in the art should understand that the embodiments of the present disclosure may be provided as a method, a system, or a computer program product. So, the present disclosure may adopt the forms of a hardware embodiment, a software embodiment, or an embodiment combining software and hardware. Moreover, the present disclosure may adopt the form of a computer program product which is implemented on one or more computer available storage media (including, not limited to, a magnetic disk memory or an optical memory) including computer available program codes. Based on this understanding, the technical solution of the embodiments of the present disclosure substantially or the part making a contribution to the conventional art can be embodied in the form of software product; the computer software product is stored in a storage medium, and includes a number of instructions to make a computer device (which may be a personal computer, a server or a network device, etc.) perform all or part of the method in each embodiment of the present disclosure. The storage medium may be a USB flash disk, a mobile hard disk, a Read Only Memory (ROM), a magnetic disk memory or an optical memory, and other media capable of storing program codes. Therefore, the embodiments of the present disclosure are not limited to any particular combination of hardware and software.

Correspondingly, the embodiments of the present disclosure also provides a computer storage medium storing a computer program. The computer program is configured to perform the communication method for a bandwidth limited device in the embodiments of the present disclosure.

The present disclosure is described according to the flowcharts and/or block diagrams of the method, the device (system) and the computer program product in the embodiments of the present disclosure. It should be understood that each flow and/or block in the flowchart and/or block diagram, and the combination of the flow and/or block in the flowchart and/or block diagram can be implemented by the computer program instructions. These computer program instructions can be provided to a processor of a general-purpose computer, a special-purpose computer, an embedded processor or other programmable data processing devices to generate a machine, so that instructions which are executed by the processor of the computer or other programmable data processing devices generate a device which is used for implementing the specified functions in one or more flows of the flowchart and/or one or more blocks of the block diagram.

These computer program instructions may also be stored in the computer-readable memory which can guide the computer or other programmable data processing devices to work in a particular way, so that the instructions stored in the computer-readable memory generate a product including an instruction device. The instruction device implements the specified functions in one or more flows of the flowchart and/or one or more blocks of the block diagram.

These computer program instructions may also be loaded on the computer or other programmable data processing devices, so that a series of operation steps are performed on the computer or other programmable data processing devices to generate the processing implemented by the computer, and the instructions executed on the computer or other programmable data processing devices provide the steps for implementing the specified functions in one or more flows of the flowchart and/or one or more blocks of the block diagram.

The above is only the preferred embodiments of the present disclosure and not intended to limit the protection scope of the present disclosure.

### INDUSTRIAL APPLICABILITY

In the technical solution of the embodiments of the present disclosure, configuration or allocation information about the bandwidth limited D2D resource is received, and the D2D sending or reception is performed according to configuration or allocation information about the bandwidth limited D2D resource. By means of the communication method for a bandwidth limited device provided by the embodiments of the present disclosure, it may be supported that the eMTC, the NB-IoT and other bandwidth limited UE send the data packet to the relay UE by the way of D2D, and then the relay UE forwards the data packet to the network; or, the relay UE sends, to the bandwidth limited UE, the data packet coming from the network and to be sent to the bandwidth limited UE by the way of D2D. Moreover, it may also be supported that the D2D communication is directly performed between the bandwidth limited UE. The embodiments of the present disclosure consider all situations where a system supports one or multiple narrow bands. When the system supports multiple narrow bands, a resource load condition is considered, a work narrow band is negotiated, and the implementation of data transmission between a bandwidth limited device and the relay UE and a bandwidth limited device on the opposite end is ensured, thereby reducing an energy consumption of the bandwidth limited device with a low cost.

## Claims

1. A communication method for a bandwidth limited device, comprising:
receiving configuration or allocation information about a bandwidth limited Device-to-Device, D2D, resource; and
performing D2D sending or reception according to the configuration or allocation information about the bandwidth limited D2D resource.

2. The communication method for a bandwidth limited device of claim 1, wherein the bandwidth limited D2D resource is a resource or resource pool for D2D discovery or communication which is configured or allocated on one or more narrow bands, a bandwidth of the resource or resource pool for D2D discovery or communication not exceeding a bandwidth of the narrow band.

3. The communication method for a bandwidth limited device of claim 2, wherein the bandwidth of the narrow band comprises at least one of 1.4 MHz or 180 MHz.

4. The communication method for a bandwidth limited device of claim 1, wherein configuration or allocation information about the bandwidth limited D2D resource comprises at least one of the following:
an indication of limited bandwidth;
an indication of the existence of a resource for sending or receiving in bandwidth limited D2D discovery or communication;
a resource or resource pool for sending or receiving in bandwidth limited D2D discovery or communication;
an index of the resource pool for sending or receiving in bandwidth limited D2D discovery or communication;
a narrow band corresponding to sending or receiving in bandwidth limited D2D discovery or communication;
a narrow band corresponding to the resource or resource pool for sending or receiving in bandwidth limited D2D discovery or communication;
a frequency point corresponding to the resource or resource pool for sending or receiving in bandwidth limited D2D discovery or communication;
a Public Land Mobile Network, PLMN, corresponding to the resource or resource pool for sending or receiving in bandwidth limited D2D discovery or communication;
a cell Identity, ID, corresponding to the resource or resource pool for sending or receiving in bandwidth limited D2D discovery or communication;
a narrow band index corresponding to the resource or resource pool for sending or receiving in bandwidth limited D2D discovery or communication;
a narrow band corresponding to D2D transmission by bandwidth limited User Equipment, UE; or
a resource or resource pool for sending or receiving in bandwidth limited D2D discovery or communication corresponding to a resource used for the D2D transmission by the bandwidth limited UE.

5. The communication method for a bandwidth limited device of claim 4, wherein the resource or resource pool for bandwidth limited D2D communication comprises at least one of the following:
a D2D control resource or resource pool; or
a D2D data resource or resource pool.

6. The communication method for a bandwidth limited device of claim 1, wherein receiving configuration or allocation information about the bandwidth limited D2D resource comprises at least one of:
receiving, by the bandwidth limited UE, configuration or allocation information about the bandwidth limited D2D resource, which is sent by a network control unit;
acquiring, by the bandwidth limited UE, configuration or allocation information about the bandwidth limited D2D resource, which is preconfigured by a system or is built in the system;
receiving, by the bandwidth limited UE, configuration or allocation information about the bandwidth limited D2D resource, which is sent by relay UE or opposite-end UE;
receiving, by the relay UE, configuration or allocation information about the bandwidth limited D2D resource, which is sent by the network control unit;
receiving, by the opposite-end UE, configuration or allocation information about the bandwidth limited D2D resource, which is sent by the network control unit; or
receiving, by the opposite-end UE, configuration or allocation information about the bandwidth limited D2D resource, which is sent by the bandwidth limited UE.

7. The communication method for a bandwidth limited device of claim 6, wherein the network control unit comprises at least one of an eNodeB, eNB, a Proximity Service, ProSe, entity, or a Mobility Management Entity, MME;
the relay UE and the opposite-end UE satisfy at least one of the following:
the relay UE is UE that supports bandwidth limited D2D discovery or communication, and forwards data or signaling from the bandwidth limited UE to a network, or forwards the data or signaling from the network to the bandwidth limited UE;
the opposite-end UE is UE that supports the bandwidth limited D2D discovery or communication, and performs D2D discovery or communication with the bandwidth limited UE; or
the relay UE and the opposite-end UE are UE with a limited bandwidth or a normal bandwidth.

8. The communication method for a bandwidth limited device of claim 6, wherein receiving, by the bandwidth limited UE or the relay UE or the opposite-end UE, the configuration or allocation information about the bandwidth limited D2D resource which is sent by the network control unit comprises at least one of:
receiving, by the bandwidth limited UE or the relay UE or the opposite-end UE, configuration or allocation information about a resource pool for sending or receiving in bandwidth limited D2D discovery or communication, which is sent by the network control unit through a system broadcast message; or
receiving, by the bandwidth limited UE or the relay UE or the opposite-end UE, configuration or allocation information about a resource or resource pool for sending or receiving in bandwidth limited D2D discovery or communication, which is sent by the network control unit through proprietary signaling.

9. The communication method for a bandwidth limited device of claim 8, wherein before receiving, by the bandwidth limited UE, the configuration or allocation information about the resource or resource pool for sending or receiving in bandwidth limited D2D discovery or communication, which is sent by the network control unit through the proprietary signaling, the method further comprises:
sending, by the bandwidth limited UE or the relay UE or the opposite-end UE, a bandwidth limited D2D resource configuration or allocation request to the network control unit.

10. The communication method for a bandwidth limited device of claim 9, wherein the bandwidth limited D2D resource configuration or allocation request comprises at least one of the following:
an indication of limited bandwidth;
a bandwidth limited UE ID;
a bandwidth limited D2D relay indication;
a bandwidth limited D2D unicast indication;
an indication of the relay UE supporting bandwidth limited D2D transmission;
an ID of the relay UE supporting the bandwidth limited D2D transmission;
an ID of the bandwidth limited UE accessing a relay;
an indication of an opposite-end UE supporting bandwidth limited D2D transmission;
an ID of the opposite-end UE supporting bandwidth limited D2D transmission;
a request for the resource for sending or receiving in bandwidth limited D2D discovery or communication;
a resource or resource pool narrow band for sending or receiving in bandwidth limited D2D discovery or communication;
an index or size of the resource or resource pool narrow band for sending or receiving in bandwidth limited D2D discovery or communication;
the resource or resource pool for sending or receiving in bandwidth limited D2D discovery or communication; or
an index of the resource or resource pool for sending or receiving in bandwidth limited D2D discovery or communication.

11. The communication method for a bandwidth limited device of claim 9, wherein the bandwidth limited D2D resource configuration or allocation request is carried through at least one of the following:
SidelinkUEInformation;
Sidelink, SL, buffer state report information; or
newly designed Radio Resource Control, RRC, proprietary signaling.

12. The communication method for a bandwidth limited device of claim 6, wherein the configuration or allocation information about the bandwidth limited D2D resource, which is sent by the relay UE or the opposite-end UE or the bandwidth limited UE, is carried through at least one of the following:
relay discovery broadcast information;
relay discovery response information;
relay discovery request information;
D2D discovery broadcast information;
D2D discovery request information;
D2D discovery response information;
direct connection establishment request information;
direct connection establishment response information;
PC5 resource allocation information; or
newly designed PC5 signaling.

13. The communication method for a bandwidth limited device of claim 6, wherein
before receiving, by the bandwidth limited UE, the configuration or allocation information about the bandwidth limited D2D resource which is sent by the relay UE or the opposite-end UE, the method further comprises: sending, by the bandwidth limited UE, a bandwidth limited D2D communication request to the relay UE or the opposite-end UE; or,
before receiving, by the opposite-end UE, configuration or allocation information about the bandwidth limited D2D resource which is sent by the bandwidth limited UE, the method further comprises: sending, by the opposite-end UE, the bandwidth limited D2D communication request to the bandwidth limited UE.

14. The communication method for a bandwidth limited device of claim 13, wherein the bandwidth limited D2D communication request comprises at least one of the following:
an indication of limited bandwidth;
a bandwidth limited UE ID;
a bandwidth limited D2D relay indication;
a bandwidth limited D2D unicast communication indication;
a request for a resource for sending or receiving in bandwidth limited D2D discovery or communication;
a resource or resource pool narrow band for sending or receiving in bandwidth limited D2D discovery or communication;
an index or size of the resource or resource pool narrow band for sending or receiving in bandwidth limited D2D discovery or communication;
the resource or resource pool for sending or receiving in bandwidth limited D2D discovery or communication; or
an index of the resource or resource pool for sending or receiving in bandwidth limited D2D discovery or communication.

15. The communication method for a bandwidth limited device of claim 13, wherein the bandwidth limited D2D communication request is carried through at least one of the following:
relay discovery request information;
relay discovery broadcast information;
D2D discovery request information;
D2D discovery broadcast information;
direct connection establishment request information;
a PC5 buffer state report; or
newly designed PC5 signaling.

16. The communication method for a bandwidth limited device of claim 1, wherein performing the D2D reception according to the configuration or allocation information about the bandwidth limited D2D resource comprises:
performing, by the bandwidth limited UE, the D2D reception according to a resource pool corresponding to a resource pool for receiving or an index of the resource pool for receiving in bandwidth limited D2D discovery or communication, which is configured by the network control unit or the relay UE or the opposite-end UE;
performing, by the bandwidth limited UE, the D2D reception according to the resource corresponding to a narrow band for receiving or an index of the narrow band for receiving in bandwidth limited D2D discovery or communication, which is configured by the network control unit or the relay UE or the opposite-end UE;
performing, by the relay UE or the opposite-end UE, D2D discovery or communication receiving in all the resource pools for receiving in bandwidth limited D2D discovery or communication;
selecting, by the bandwidth limited UE or the relay UE or the opposite-end UE, the first resource pool for receiving in bandwidth limited D2D discovery or communication to perform the D2D discovery or communication receiving; or
performing in a time division mode, by the bandwidth limited UE, the D2D discovery or communication receiving in all the resource pools for receiving in bandwidth limited D2D discovery or communication.

17. The communication method for a bandwidth limited device of claim 1, wherein performing the D2D sending according to the configuration or allocation information about the bandwidth limited D2D resource comprises at least one of:
selecting, by the bandwidth limited UE or the relay UE or the opposite-end UE, a resource from a first resource pool for sending in bandwidth limited D2D discovery or communication, to perform the D2D discovery or communication sending;
selecting, by the bandwidth limited UE, a resource from a resource pool for sending in bandwidth limited D2D discovery or communication which is selected randomly or selected by performing the hash map on an ID of the bandwidth limited UE according to a predefined rule, to perform the D2D discovery or communication sending;
using, by the bandwidth limited UE, a narrow band resource corresponding to the bandwidth limited D2D transmission to perform the D2D transmission;
selecting, by the relay UE or the opposite-end UE according to narrow band information corresponding to the received resource used for the D2D transmission by the bandwidth limited UE, a resource from a resource pool for sending or receiving in bandwidth limited D2D discovery or communication corresponding to the narrow band, to perform the D2D discovery or communication sending;
selecting, by the relay UE or the opposite-end UE according to the resource or resource pool for sending or receiving in bandwidth limited D2D discovery or communication corresponding to the received resource used for the D2D transmission by the bandwidth limited UE, a resource from the corresponding resource pool for sending or receiving in bandwidth limited D2D discovery or communication, to perform the D2D discovery or communication sending;
selecting, by the bandwidth limited UE, the resource according to a resource pool corresponding to a received resource pool for sending or received index of the resource pool for sending in bandwidth limited D2D discovery or communication, to perform sending;
selecting, by the bandwidth limited UE, a resource according to a resource pool corresponding to a received resource narrow band for sending or received index of the resource narrow band for sending in bandwidth limited D2D discovery or communication, to perform sending;
performing, by the bandwidth limited UE, the D2D sending according to a resource for sending in bandwidth limited D2D discovery or communication which is allocated by the network control unit or the relay UE or the opposite-end UE; or
assembling and configuring, by the relay UE or the opposite-end UE, the information about the bandwidth limited UE of the corresponding narrow band, according to a resource narrow band corresponding to a resource for sending in bandwidth limited D2D discovery or communication which is allocated by the network control unit, to perform the D2D sending.

18. A bandwidth limited device, comprising:
a receiving unit, which is configured to receive configuration or allocation information about a bandwidth limited D2D resource; and
a transmitting unit, which is configured to perform D2D sending or reception according to configuration or allocation information about the bandwidth limited D2D resource.

19. The bandwidth limited device of claim 18, wherein configuration or allocation information about the bandwidth limited D2D resource comprises at least one of the following:
an indication of limited bandwidth;
an indication of the existence of a resource for sending or receiving in bandwidth limited D2D discovery or communication;
a resource or resource pool for sending or receiving in bandwidth limited D2D discovery or communication;
an index of the resource pool for sending or receiving in bandwidth limited D2D discovery or communication;
a narrow band corresponding to sending or receiving in bandwidth limited D2D discovery or communication;
a narrow band corresponding to the resource or resource pool for sending or receiving in bandwidth limited D2D discovery or communication;
a frequency point corresponding to the resource or resource pool for sending or receiving in bandwidth limited D2D discovery or communication;
a Public Land Mobile Network, PLMN, corresponding to the resource or resource pool for sending or receiving in bandwidth limited D2D discovery or communication;
a cell Identity, ID, corresponding to the resource or resource pool for sending or receiving in bandwidth limited D2D discovery or communication;
a narrow band index corresponding to the resource or resource pool for sending or receiving in bandwidth limited D2D discovery or communication;
a narrow band corresponding to D2D transmission by bandwidth limited User Equipment, UE; or
the resource or resource pool for sending or receiving in bandwidth limited D2D discovery or communication corresponding to the resource used for the D2D transmission by the bandwidth limited UE.

20. The bandwidth limited device of claim 18, wherein the bandwidth limited device is the bandwidth limited UE, correspondingly the receiving unit is further configured to receive configuration or allocation information about the bandwidth limited D2D resource which is sent by a network control unit; and/or, acquire configuration or allocation information about the bandwidth limited D2D resource which is preconfigured by a system or is built in the system; and/or, receive configuration or allocation information about the bandwidth limited D2D resource which is sent by relay UE or opposite-end UE;
the bandwidth limited device is the relay UE, correspondingly the receiving unit is further configured to receive configuration or allocation information about the bandwidth limited D2D resource which is sent by the network control unit;
the bandwidth limited device is the opposite-end UE, correspondingly the receiving unit is further configured to receive configuration or allocation information about the bandwidth limited D2D resource which is sent by the network control unit; and/or, receive configuration or allocation information about the bandwidth limited D2D resource which is sent by the bandwidth limited UE.

21. The bandwidth limited device of claim 18, wherein the transmitting unit comprises: a receiving subunit;
the bandwidth limited device is the bandwidth limited UE, correspondingly the receiving subunit is configured to perform the D2D reception according to a resource pool corresponding to a resource pool for receiving or an index of the resource pool for receiving in bandwidth limited D2D discovery or communication, which is configured by the network control unit or the relay UE or the opposite-end UE; and/or perform the D2D reception according to a resource corresponding to a narrow band for receiving or an index of the narrow band for receiving in bandwidth limited D2D discovery or communication, which is configured by the network control unit or the relay UE or the opposite-end UE; and/or, select the first resource pool for receiving in bandwidth limited D2D discovery or communication to perform the D2D discovery or communication receiving; and/or perform, in a time division mode, the D2D discovery or communication receiving in all the resource pools for receiving in bandwidth limited D2D discovery or communication;
the bandwidth limited device is the relay UE or the opposite-end UE, correspondingly the receiving subunit is configured to perform the D2D discovery or communication receiving in all the resource pools for receiving in bandwidth limited D2D discovery or communication; and/or, select the first resource pool for receiving in bandwidth limited D2D discovery or communication to perform the D2D discovery or communication receiving.

22. The bandwidth limited device of claim 18, wherein the transmitting unit comprises: a sending subunit;
the bandwidth limited device is the bandwidth limited UE or the relay UE or the opposite-end UE, correspondingly the sending subunit is configured to select a resource from a first resource pool for sending in bandwidth limited D2D discovery or communication, to perform the D2D discovery or communication sending;
the bandwidth limited device is the bandwidth limited UE, correspondingly the sending subunit is configured to select a resource from a resource pool for sending in bandwidth limited D2D discovery or communication which is selected randomly or selected by performing the hash map on the bandwidth limited UE ID according to a predefined rule, to perform the D2D discovery or communication sending; and/or, use a narrow band resource corresponding to the bandwidth limited D2D transmission to perform the D2D transmission;
the bandwidth limited device is the relay UE or the opposite-end UE, correspondingly the sending subunit is configured to select, according to the narrow band information corresponding to the received resource used for the D2D transmission by the bandwidth limited UE, a resource from the resource pool for sending or receiving in bandwidth limited D2D discovery or communication corresponding to the narrow band, to perform the D2D discovery or communication sending; and/or, select, according to the resource or resource pool for sending or receiving in bandwidth limited D2D discovery or communication corresponding to the received resource used for the D2D transmission by the bandwidth limited UE, a resource from the corresponding resource pool for sending or receiving in bandwidth limited D2D discovery or communication, to perform the D2D discovery or communication sending;
the bandwidth limited device is the bandwidth limited UE, correspondingly the sending subunit is configured to select, according to a resource pool corresponding to a received resource pool for sending or received index of the resource pool for sending in bandwidth limited D2D discovery or communication, the resource to perform sending; and/or, select, according to the resource pool corresponding to the received resource narrow band for sending or received index of the resource narrow band for sending in bandwidth limited D2D discovery or communication, the resource to perform sending; and/or, perform the D2D sending according to a resource for sending in bandwidth limited D2D discovery or communication which is allocated by the network control unit or the relay UE or the opposite-end UE;
the bandwidth limited device is the relay UE or the opposite-end UE, correspondingly the sending subunit is configured to assemble and configure, according to the resource narrow band corresponding to a resource for sending in bandwidth limited D2D discovery or communication which is allocated by the network control unit, the information about the bandwidth limited UE of the corresponding narrow band to perform the D2D sending.

23. A computer storage medium having stored thereon computer-executable instructions configured to perform a communication method for a bandwidth limited device according to any one of claims 1 to 17.
